# EUROPÄISCHE PATENTANMELDUNG

(11) **EP 1 609 597 A2**
(43) Veröffentlichungstag der Anmeldung: **28.12.2005**
(21) Anmeldenummer: 05011970.0
(22) Anmeldetag: 03.06.2005
(51) Int. Cl.: B32B 31/04, B32B 31/20, B30B 5/02, B30B 7/02, B30B 15/32

(54) **Laminator zum Herstellen von Schichtkörpern**

(30) Priorität: 04.06.2004 DE 102004027545
(71) Anmelder: Meier Vakuumtechnik GmbH, 46395 Bocholt (DE)
(72) Erfinder: Klein, Norbert, 46395 Bocholt (DE); Stevens, Hans-Gerd, 46399 Bocholt (DE)
(74) Vertreter: Schulze Horn & Partner

(57) **Zusammenfassung**

Die Erfindung betrifft einen Laminator (1) zum Herstellen von Schichtkörpern, insbesondere von photovoltaischen Solarzellen-Modulen oder Verbundglasscheiben, bestehend aus mindestens einer Laminierkammer (10) mit mehreren darin etagenartig angeordneten, beheizbaren Laminierplatten (2), wobei auf jeder Laminierplatte (2) jeweils eine oder mehrere Laminatschichten (4') mit einem plattenförmigen Bauteil (4) verschweißbar sind und wobei der Laminator (1) Mittel zum Ausüben einer Andrückkraft auf die Bauteile (4) und die Laminatschichten (4') während des Laminiervorgangs aufweist.

Der Laminator ist dadurch gekennzeichnet, daß pro Laminierplatte (2) je eine Andrückeinrichtung (3) vorgesehen ist, die jeweils durch eine randseitig dicht eingespannte Membran (30) gebildet ist, die an ihrer von einem benachbarten Bauteil (4) und den zugehörigen Laminatschichten (4') abgewandten Seite eine evakuierbare und belüftbare oder mit einem Druckmedium beschickbare oder von einem komprimierbaren und selbstrückstellbaren Material gefüllte Membrankammer (31) begrenzt.

## Beschreibung

Die vorliegende Erfindung betrifft einen Laminator zum Herstellen von Schichtkörpern, bestehend aus mindestens einer Laminierkammer mit mehreren darin etagenartig angeordneten, beheizbaren Laminierplatten, wobei auf jeder Laminierplatte jeweils eine oder mehrere Laminatschichten mit einem Bauteil verschweißbar sind und wobei der Laminator Mittel zum Ausüben einer Andrückkraft auf die Bauteile und die Laminatschichten während des Laminiervorgangs aufweist.

Eine Viel-Platten-Presse zum Herstellen von Laminaten mit den vorstehend genannten Merkmalen ist aus dem Dokument DE-A-37 25 007 bekannt. Nachteilig ist bei dieser Presse, daß sie nur für absolut flache und ebene, blattförmige Laminate geeignet ist, weil die Platten nur ebene Laminate mit über deren Fläche gleichbleibender Dicke flächig andrücken können. Damit ist die Presse in ihren Einsatzmöglichkeiten sehr beschränkt; insbesondere das Herstellen von in ihrer Oberfläche zwangsläufig unebenen photovoltaischen Solarzellen-Modulen oder von nicht-ebenen, d.h. z.B. gewölbten, Verbundglasscheiben ist mit dieser bekannten Presse nicht möglich.

Weitere Laminatoren sind aus der Praxis des Laminierens von Bauteilen bekannt. Für Solarzellen-Module werden z.B.

Weitere Laminatoren sind aus der Praxis des Laminierens von Bauteilen bekannt. Für Solarzellen-Module werden z.B. mehrere Halbleiterwafer und zugehörige elektrische Leiter sowie wenigstens eine Glasscheibe und eine oder mehrere thermoplastische transparente Folien miteinander durch das Laminieren dauerhaft verbunden.

Ein konkreter Laminator ist aus DE 33 00 622 C2 bekannt. Dieser bekannte Laminator besitzt eine einzelne horizontal ausgerichtete Heizplatte, deren Fläche an die Fläche eines zu laminierenden Bauteils angepaßt ist. Als nachteilig ist bei diesen bekannten Laminatoren anzusehen, daß sie für ihre Aufstellung eine große Fläche verbrauchen, wenn eine hohe Laminier-Kapazität erreicht werden soll. Dies führt häufig zu dem Problem, daß nachträgliche Kapazitäts-Erhöhungen nur durch Neubau von zusätzlichen Gebäuden für die Aufstellung weiterer Laminatoren möglich sind, was zu hohen Investitionskosten führt.

Aus EP 0 825 654 A2 ist ein kontinuierliches Laminiersystem zur Herstellung von Solarzellen-Modulen bekannt, das das zuvor beschriebene Platzproblem löst. In diesem System werden Laminatschichten auf eine Laminierplatte mit Andrückeinrichtung aufgebracht und es werden dann mehrere Laminierplatten gestapelt in einem Ofen mit einer Tür simultan laminiert.

Nachteilig ist aber bei diesem weiteren bekannten Laminiersystem, daß die Erwärmung der Laminatschichten viel Zeit in Anspruch nimmt, weil die Aufnahme der vom Ofen erzeugten Wärme in die Laminatschichten nur langsam erfolgt. Wenn während des Laminierens das Innere des Ofens evakuiert wird, stellt sich das Problem des langsamen Erwärmens der Laminatschichten besonders stark. Der mit diesem System erzielbare Produktionstakt ist daher relativ langsam, während der Energieverbrauch relativ hoch ist, wodurch sich eine geringe Wirtschaftlichkeit des Systems ergibt. Zudem besteht auch hier der Nachteil, daß nur ebene Bauteile laminierbar sind.

Für die vorliegende Erfindung stellt sich deshalb die Aufgabe, einen Laminator der eingangs genannten Art zu schaffen, der bei geringem Energie- und Flächenverbrauch eine größere Freiheit hinsichtlich der Form der zu laminierenden Bauteile sowie eine hohe Laminier-Kapazität mit einem schnellen Produktionstakt bietet.

Die Lösung dieser Aufgabe gelingt erfindungsgemäß mit einem Laminator der eingangs genannten Art, der dadurch gekennzeichnet ist, daß pro Laminierplatte je eine Andrückeinrichtung vorgesehen ist, die jeweils durch eine randseitig dicht eingespannte Membran gebildet ist, die an ihrer von einem benachbarten Bauteil und den zugehörigen Laminatschichten abgewandten Seite eine evakuierbare und belüftbare oder mit einem Druckmedium beschickbare oder von einem komprimierbaren und selbstrückstellbaren Material gefüllte Membrankammer begrenzt.

Mit dem erfindungsgemäßen Laminator wird erreicht, daß mehrere Bauteile auf je einer eigenen Laminierplatte übereinander unter Einsatz einer entsprechenden Anzahl von Andrückeinrichtungen gleichzeitig laminiert werden können. Da jeder Laminierplatte und damit jedem zu laminierenden Bauteil eine eigene Andrückeinrichtung in Form je einer Membran zugeordnet ist, werden die Bauteile jeweils individuell angedrückt, wobei sich die Membran jeweils an die Oberfläche des Bauteils problemlos anpaßt, auch und insbesondere, wenn das Bauteil in seiner Oberfläche uneben ist. Mit jeder Membran läßt sich eine gleichmäßige Andrückkraft auch über größere Flächen erzeugen. Gleichzeitig läßt sich die Größe der Andrückkraft durch die Wahl des in der Membrankammer herrschenden Drucks für jede Laminierplatte individuell sowie sehr genau und in weiten Bereichen variierend je nach Bedarf einstellen; es können also in einem Laminiertakt im Laminator gleichzeitig unterschiedliche Bauteile laminiert werden, die z.B. unterschiedliche Andruckkräfte erfordern. Da im erfindungsgemäßen Laminator viele Laminierungen zugleich erfolgen, wird ein schneller Produktionstakt bei einer hohen Flexibilität hinsichtlich verschiedener Bauteile erreicht. Die Aufstellfläche für den Laminator ist dabei praktisch nicht größer ist als bei einem herkömmlichen Laminator mit einer einzigen Laminierplatte. Damit läßt sich ein zur Verfügung stehender Aufstellungsraum in einem Gebäude viel effektiver nutzen, weil auch die Höhe eines Gebäudes für die Aufstellung des Laminators genutzt wird. Außerdem ist ein Laminator mit mehreren Laminierplatten mit jeweils integrierter Andrückeinrichtung kostengünstiger herstellbar und betreibbar als eine entsprechende Anzahl von Laminatoren mit jeweils nur einer einzelnen Laminierplatte mit Andrückeinrichtung.

In weiterer Ausgestaltung der Erfindung ist vorgesehen, daß die Laminierkammer durch wenigstens einen Deckel oder eine Tür geöffnet und geschlossen werden kann und im geschlossenen Zustand luftdicht und zur Ausführung eines Laminiervorganges unter Vakuum evakuierbar ist. Mit einem so ausgeführten Laminator lassen sich auch Laminiervorgänge ausführen, bei denen ein Vakuum notwendig oder sinnvoll ist, beispielsweise um Luftblaseneinschlüsse zwischen dem Bauteil und den Laminatschichten sicher auszuschließen.

Eine bevorzugte Weiterbildung des zuvor beschriebenen Laminators sieht vor, daß alle Laminierplatten und Andrückeinrichtungen in einer einzigen gemeinsamen Laminierkammer angeordnet sind. Bei dieser Ausgestaltung des Laminators wird die Konstruktion der Laminierkammer einfach gehalten, da sie sämtliche Laminierplatten und Andrückeinrichtungen umschließt. Mit diesem Laminator können dann alle gleichzeitigen Laminiervorgänge entweder sämtlich unter Vakuum oder sämtlich unter atmosphärischem Luftdruck, je nach Bedarf, durchgeführt werden.

Weiterhin ist bevorzugt vorgesehen, daß die gemeinsame Laminierkammer durch einen Vakuumschrank gebildet ist, in dem die Laminierplatten in horizontaler Ausrichtung angeordnet sind und an dem mindestens eine Seitenwand als verstellbare Tür ausgebildet ist. Diese Ausführung stellt eine günstige konstruktive Lösung dar. Das Beschicken des Laminators mit zu laminierenden Bauteilen und das Entladen der laminierten Bauteile aus dem Laminator ist vorteilhaft einfach durchführbar, da die mindestens eine Seitenwand als verstellbare Tür ausgebildet ist. So ist ein großflächiger Zugang zum Inneren des Vakuumschranks für das Beladen und Entladen gegeben. In seiner einfachsten Ausführung kann der Laminator dabei für eine manuelle Beladung und Entladung vorgesehen sein, wobei dann Bedienungspersonal die zu laminierenden Bauteile zusammen mit den Laminatschichten in den Laminator einlegt und nach dem Laminiervorgang die fertig laminierten Bauteile aus dem Laminator entnimmt.

Für den erfindungsgemäßen Laminator ist weiter bevorzugt vorgesehen, daß die Laminierplatten vertikal bewegbar geführt sind und zwischen einer auseinander gefahrenen Stellung für das Zuführen der Bauteile und der Laminatschichten und für das Abführen der laminierten Bauteile einerseits und einer zusammen gefahrenen Stellung für den Laminiervorgang andererseits verfahrbar sind. Die vertikale Bewegbarkeit der Laminierplatten erlaubt eine günstige Betriebsweise des Laminators, da zum Be- und Entladen die Laminierplatten auseinander gefahren und für den Laminiervorgang zusammen gefahren werden können.

Damit die Laminierplatten bei ihrem vertikalen Verfahren innerhalb des Laminators eine exakte Ausrichtung beibehalten, ist weiter vorgesehen, daß jede Laminierplatte je einen eigenen Plattenrahmen für ihre Halterung aufweist, der jeweils seinerseits in einem in der Laminierkammer angeordneten Führungsrahmen, der die vertikale Bewegbarkeit der Laminierplatten ermöglicht, geführt und gehaltert ist.

Weiter wird vorgeschlagen, daß jede der Laminierplatten mindestens eine Heizplatte aufweist oder umfaßt. Damit ist eine rasche Erhitzung des zu laminierenden Bauteils und der Laminatschichten gewährleistet, was für einen schnellen Produktionstakt günstig ist.

Bevorzugt ist weiterhin vorgesehen, daß die Heizplatte jeweils an der Oberseite und die Andrückeinrichtung jeweils an der Unterseite der Laminierplatte angeordnet ist und daß im zusammen gefahrenen Zustand der Laminierplatten mittels der Andrückeinrichtung jeweils in Richtung zu der Heizplatte der darunterliegenden Laminierplatte die Andrückkraft ausübbar ist. Mit dieser Konstruktion wird vorteilhaft erreicht, daß die Heizplatten im Verhältnis zu der Andrückeinrichtung jeweils unten liegen, wodurch die zu laminierenden Bauteile zunächst zur Erwärmung auf die Heizplatten aufgelegt werden können. Nach dem Zusammenfahren der Laminierplatten können dann die Andrückeinrichtungen die für den Laminiervorgang benötigte Andrückkraft auf die Bauteile und ihre Laminatschichten gegen die Heizplatten ausüben. Die Heizplatten und die Andrückeinrichtungen sind im zusammen gefahrenen Zustand der Laminierplatten relativ zueinander fixiert, so daß die Andrückeinrichtungen auf diese Weise eine Abstützung erfahren, die ein Abheben der Laminierplatten voneinander durch die von den Andrückeinrichtungen ausgeübten Kräfte verhindert.

Da die Membranen im laufenden Betrieb des Laminators einer Ermüdung und einem Verschleiß unterliegen, ist zweckmäßig weiter vorgesehen, daß jede Membran auf/in je einen eigenen, von der zugehörigen Laminierplatte trennbaren Membranrahmen dichtend aufgespannt oder aufgeschraubt oder eingespannt ist. Auf diese Weise ist bei Bedarf ein schneller und einfacher Austausch von Membranen möglich, ohne daß es zu einem längeren Stillstand des Laminators kommt.

In einer konkreten Ausführung ist vorgesehen, daß jeder Membranrahmen in je einer parallel zur Flächenebene der Membran in der zugehörigen Laminierplatte verlaufenden Schiebeführung werkzeuglos einschiebbar und herausziehbar gehaltert ist. Bei dieser Ausführung des Laminators können die Membranrahmen mit der zugehörigen Membran besonders schnell ausgebaut und eingebaut werden.

Um die Membranrahmen, die kaum einem Verschleiß unterliegen, weiter einsetzen zu können, ist in weiterer Ausgestaltung vorgesehen, daß jede Membran an ihrem Umfang mit einem umlaufenden Randprofil versehen ist, wobei das Randprofil im Querschnitt hakenförmig ist und im auf den Membranrahmen aufgespannten Zustand der Membran den Membranrahmen an dessen Außenumfang hintergreift und wobei das Randprofil werkzeuglos oder mittels Werkzeugeinsatzes jeweils in und außer Eingriff mit dem Membranrahmen der zugehörigen Laminierplatte bringbar ist. Diese Ausgestaltung erlaubt ein einfaches Lösen und Befestigen der Membran vom bzw. am Membranrahmen, wobei gleichzeitig ohne besondere Maßnahmen die benötigte Dichtigkeit erzielt wird.

Eine Ausgestaltung sieht bevorzugt vor, daß die Membran aus einem elastisch-flexiblen Material gebildet ist. Die Membran ist in dieser Ausführung besonders für solche Bauteile, die empfindlich sind, geeignet, da sie die Bauteile besonders schonend andrückt.

Vorteilhaft ist weiterhin vorgesehen, daß jeder Laminierplatte ein oder mehrere Anschläge zugeordnet sind, die im zusammen gefahrenen Zustand der Laminierplatten für eine definierte Lage der Laminierplatten relativ zueinander sorgen. Damit wird ein definierter Abstand zwischen jeder Andrückeinrichtung und der jeweils zugehörigen Laminierplatte festgelegt, wodurch Schäden an den zu laminierenden Bauteilen und an der Andrückeinrichtung verhindert werden. Die Anschläge können fest ausgebildet sein; bei Bedarf können die Anschläge auch verstellbar sein, um den Abstand, den die Laminierplatten im zusammen gefahrenen Zustand einnehmen, verändern zu können.

Vorteilhaft ist/sind der Anschlag/die Anschläge durch den Membranrahmen oder den Halterahmen der Laminierplatte oder eine an dem Rahmen vorgesehene Rahmenbefestigung gebildet. Da der Membranrahmen oder der Halterahmen oder die Rahmenbefestigung stabile Bauteile darstellen, wird dieser/dieses vorteilhaft für eine weitere Funktion genutzt, indem er/sie zugleich den Anschlag im zusammen gefahrenen Zustand der Laminierplatten bildet.

Wie weiter oben schon beschrieben, können die Laminierplatten in einer Ausgestaltung des Laminators in diesem vertikal verfahrbar sein, um sie zwischen einer auseinander gefahrenen und einer zusammen gefahrenen Stellung zu verfahren. Dieses Verfahren kann technisch unterschiedlich bewirkt werden. Eine bevorzugte Ausführung des Laminators schlägt in dieser Hinsicht vor, daß mindestens eine an der oberen oder an der unteren Laminierplatte angreifende, auf- und abwärts verfahrbare Hubeinrichtung vorgesehen ist und daß die Laminierplatten untereinander über Verbindungsglieder so verbunden sind, daß bei Bewegung der Hubeinrichtung in einer ersten Bewegungsrichtung die Laminierplatten aus ihrer zusammen gefahrenen Stellung heraus nach und nach fortschreitend in deren auseinander gefahrene Stellung überführbar sind und daß bei Bewegung der Hubeinrichtung in einer zweiten Bewegungsrichtung die Laminierplatten aus ihrer auseinander gefahrenen Stellung heraus nach und nach fortschreitend in deren zusammen gefahrene Stellung überführbar sind. Technisch besonders vorteilhaft ist bei dieser Hubeinrichtung, daß die Hubeinrichtung selbst nur in Eingriff mit der oberen oder mit der unteren Laminierplatte steht. Die Laminierplatten untereinander sind dann über die erwähnten Verbindungsglieder verbunden. Die Verbindungsglieder sind so gestaltet, daß sie eine begrenzte Bewegung der Laminierplatten relativ zueinander erlauben und so das Auseinanderfahren und das Zusammenfahren gestatten.

In konkreter Ausgestaltung kann die Hubeinrichtung beispielsweise durch mindestens eine Kolben-Zylinder-Einheit oder durch mindestens eine motorisch verstellbare Spindel gebildet sein. Mit beiden Arten der Hubeinrichtung läßt sich die gewünschte vertikale Bewegung problemlos und zuverlässig erzeugen.

Weiter ist vorgesehen, daß die Verbindungsglieder je Laminierplatte durch mehrere Zugstangen gebildet sind, die jeweils an ihrem einen Ende mit einer Laminierplatte fest verbunden sind, die jeweils durch eine Durchbrechung in der nach unten oder oben folgenden Laminierplatte verlaufen und die an ihrem anderen Ende einen vergrößerten, nicht durch die Durchbrechung passenden Kopf oder Anschlag aufweisen. Diese Ausführung der Verbindungsglieder als Zugstangen verbindet eine einfache und dadurch kostengünstige Konstruktion mit einer sehr zuverlässigen und verschleißarmen Betriebsweise.

Statt mit vertikal verfahrbaren Laminierplatten kann der Laminator alternativ so ausgeführt sein, daß alle Laminierplatten im Abstand voneinander höhenfest angeordnet sind und daß relativ dazu die Andrückeinrichtungen und/oder die Heizplatten höhenverstellbar sind. Der Vorteil dieser Ausführung des Laminators besteht insbesondere darin, daß nur kurze Verstellwege von den Andrückeinrichtungen und/oder von den Heizplatten zurückgelegt werden müssen, so daß eine schnellere Betriebsweise des Laminators erreicht werden kann.

Falls in einem Laminator gleichzeitig Bauteile laminiert werden sollen, bei denen unterschiedliche Ansprüche hinsichtlich des anzuwendenden Vakuums vorliegen, kann der Laminator so ausgeführt sein, daß jeweils eine Laminierplatte mit der jeweils zugehörigen Heizplatte und Andrückeinrichtung oder jeweils eine Gruppe aus mehreren Laminierplatten mit den zugehörigen Heizplatten und Andrückeinrichtungen in je einer eigenen, für sich evakuierbaren Laminierkammer angeordnet ist. Zudem bietet diese Aufteilung in mehrere Laminierkammern den Vorteil, daß bei einem Fehler am Laminator, z.B. bei der Vakuumerzeugung, nur ein Bauteil oder nur eine Gruppe von Bauteilen in einer einzigen Laminierkammer betroffen ist und Ausschuß wird und nicht sämtliche gleichzeitig im Laminator befindlichen Bauteile.

Unabhängig von den bisher erläuterten Ausführungen des Laminators ist für diesen bevorzugt vorgesehen, daß jede Heizplatte mit Hubelementen, vorzugsweise in Form von in die Heizplatte eingelassenen Hubstiften oder Hubleisten, ausgestattet ist, die wahlweise ein Abheben eines zu laminierenden Bauteils und seiner Laminatschichten oder eines laminierten Bauteils von der Heizplatte oder ein Absenken des zu laminierenden Bauteils und seiner Laminatschichten auf die Heizplatte gestatten. Diese Hubelemente können vorteilhaft dazu genutzt werden, ein Bauteil mit den Laminatschichten nach dem Einführen in den Laminator zunächst noch auf einem Abstand von der Oberfläche der Heizplatte zu halten. Hierdurch wird eine vorzeitige und ungleichmäßige Erwärmung des Bauteils und der Laminatschichten, die zu einer unerwünschten Verformung in Form einer Aufschüsselung führen kann, vermindert oder sogar verhindert. Durch entsprechend gesteuertes Verstellen der Hubelemente nach oben und nach unten kann gewährleistet werden, daß die zu laminierenden Bauteile nur während des eigentlichen Laminiervorganges in Kontakt mit der Oberfläche der Heizplatte selbst kommen.

Wie weiter oben erwähnt, kann der Laminator in einer einfachen Ausführung für eine manuelle Beladung und Entladung vorgesehen sein. Für eine rationelle Massenproduktion ist es aber vorteilhaft, auch die Beladung und Entladung ohne Personaleinsatz durchführen zu können. Hierfür sieht eine weitere Ausgestaltung des Laminators vor, daß er eine die zu laminierenden Bauteile und die Laminatschichten zuführende und/oder die laminierten Bauteile nach dem Laminiervorgang abführende Fördereinrichtung umfaßt. In dieser Ausgestaltung kann der Laminator in eine automatische Fertigungs- und Bearbeitungsanlage integriert werden, so daß auch bei großen Stückzahlen eine schnelle Bearbeitung mit hoher Wirtschaftlichkeit erreicht wird.

Die Fördereinrichtung oder Fördereinrichtungen können unterschiedlich ausgestaltet sein. Eine erste Ausgestaltung der Fördereinrichtung des Laminators sieht vor, daß diese pro Laminierplatte je ein eigenes, eine das zu laminierende Bauteil und die Laminatschichten tragende Oberfläche der Laminierplatte überstreichendes, endloses oder endliches Förderband umfaßt. Mit diesem Förderband kann ein zu laminierendes Bauteil von außen her auf die Laminierplatte, z.B. deren Heizplatte, transportiert und nach dem Laminiervorgang wieder von der Laminierplatte weg und aus dem Laminator heraus transportiert werden. Das Förderband besteht dabei zweckmäßig aus einem wärmeleitenden Material, das die Wärmeleitung aus der Heizplatte in das auf dem Förderband liegende Bauteil mit seinen Laminatschichten nicht oder nicht wesentlich behindert.

Ergänzend kann das zuvor beschriebene Förderband außer der das zu laminierende Bauteil und die Laminatschichten tragenden Oberfläche der Laminierplatte auch die darüberliegende oder die darunterliegende Andrückeinrichtung überstreichen. Hiermit wird erreicht, daß die Bauteile und die Laminatschichten bei ihrem Durchlauf durch den Laminator nur mit dem Förderband in Kontakt kommen. Ein unmittelbarer Kontakt des Bauteils und seiner Laminatschichten mit der Heizplatte selbst oder mit der Andrückeinrichtung selbst wird hier vermieden, so daß auch keine Verschmutzung der Heizplatten und der Andrückeinrichtungen durch beim Laminiervorgang eventuell anfallende verflüssigte Kunststofftropfen entstehen kann.

In einer alternativen Ausführung der Fördereinrichtung umfaßt diese ein einziges, den Laminator mäanderförmig durchlaufendes, alle Laminierplatten überstreichendes, endloses oder endliches Förderband. Bei dieser Ausführung wird für die Fördereinrichtung nur ein einziges Förderband benötigt, was einen Gleichlauf des Beladens und Entladens mittels des Förderbandes für sämtliche Laminierplatten des Laminators zwangsläufig gewährleistet.

Auch bei dieser Ausführung der Fördereinrichtung besteht die Möglichkeit, daß das Förderband außer allen das zu laminierende Bauteil und die Laminatschichten tragenden Oberflächen der Laminierplatten auch alle Andrückeinrichtungen überstreicht. Hiermit werden die gleichen Vorteile erreicht, wie oben im Zusammenhang mit dem pro Heizplatte einzelnen Förderband im Hinblick auf die Sauberhaltung der Heizplatten und der Andrückeinrichtungen erläutert.

In einer weiteren alternativen Ausgestaltung der Fördereinrichtung umfaßt diese mindestens eine in Zu- und Abförderrichtung bewegbare Greifer- und Schieberanordnung. Mit dieser Fördereinrichtung können solche Bauteile, die in sich relativ stabil sind, von Greifern erfaßt und bewegt werden, um die Bauteile mit ihren Laminatschichten entweder in den Laminator einzubringen oder die fertig laminierten Bauteile aus dem Laminator zu entladen.

Eine weitere Automatisierung des Betriebes des Laminators und damit eine Steigerung der Wirtschaftlichkeit wird mit einer Ausführung des Laminators erreicht, bei der vorgesehen ist, daß die Fördereinrichtung mindestens einen Bauteile-Vorratsspeicher umfaßt, in dem eine der Zahl der Laminierplatten entsprechende Zahl von zu laminierenden Bauteilen mit den zugehörigen Laminatschichten in einer der jeweiligen Höhenlage der einzelnen Laminierplatten in deren auseinander gefahrener Stellung entsprechenden Höhenlage unterbringbar ist und aus dem die zu laminierenden Bauteile mit den zugehörigen Laminatschichten selbsttätig in eine Laminierposition auf den Laminierplatten überführbar sind. Dieser Bauteile-Vorratsspeicher bietet die vorteilhafte Möglichkeit, eine der Anzahl der Laminierplatten entsprechende Zahl von zu laminierenden Bauteilen einschließlich ihrer Laminatschichten passend vor dem Laminator zu positionieren. Zum Beladen des Laminators können dann alle Bauteile mit ihren Laminatschichten gleichzeitig in den Laminator überführt werden, wodurch das Beladen des Laminators sehr schnell wird und wodurch unproduktive Zeiten beim Beladen des Laminators sehr kurz gehalten werden.

Zur Beschleunigung des Entladens des Laminators wird bevorzugt vorgeschlagen, daß die Fördereinrichtung wenigstens einen Bauteile-Entladespeicher umfaßt, in den eine der Zahl der Laminierplatten entsprechende Zahl von laminierten Bauteilen in einer der jeweiligen Höhenlage der einzelnen Laminierplatten in deren auseinander gefahrener Stellung entsprechenden Höhenlage unterbringbar ist, wobei die laminierten Bauteile nach dem Laminiervorgang von den Laminierplatten selbsttätig in den Bauteile-Entladespeicher zur Abführung überführbar sind. Dieser Bauteile-Entladespeicher bietet die vorteilhafte Möglichkeit, alle laminierten Bauteile gleichzeitig aus dem Laminator zu entladen. Damit geht auch das Entladen des Laminators sehr schnell, so daß er entsprechend schnell auch wieder für die Beladung mit neuen zu laminierenden Bauteilen zur Verfügung steht. Das Entladen des Bauteile-Entladespeichers zur Abführung der laminierten Bauteile kann dann in den Phasen erfolgen, in denen im Laminator ein Laminiervorgang erfolgt.

Für eine gute Qualität der laminierten Bauteile ist es wesentlich, daß diese an ihrer Oberseite und/oder Unterseite keine Verunreinigungen oder Störungen durch beim Laminiervorgang eventuell entstehende verflüssigte Kunststofftropfen aufweisen. Eine Maßnahme zur sicheren Vermeidung solcher Störungen oder Schäden in den Oberflächen der laminierten Bauteile besteht darin, daß der Laminator je eine Zuführ- und Abführeinrichtung für mindestens eine das zu laminierende Bauteil und die Laminatschichten oberseitig und/oder unterseitig abdeckende, nach dem Laminiervorgang vom laminierten Bauteil trennbare Abdeckfolie umfaßt. Gegebenenfalls anfallende Verschmutzungen gelangen so höchstens auf die Abdeckfolie oder Abdeckfolien, in keinem Falle aber in unmittelbaren Kontakt mit den Heizplatten oder den Andrückeinrichtungen, von wo die Verschmutzungen beim nächsten Laminiervorgang auf ein Bauteil übergehen könnten. Die Abdeckfolien werden lediglich für den Laminiervorgang mit dem Bauteil zusammengebracht; nach dem Laminiervorgang werden die Abdeckfolien vom Bauteil und seinen Laminatschichten wieder entfernt, wobei dies bevorzugt automatisiert erfolgt.

In weitere Ausgestaltung des Laminators ist vorgesehen, daß jedes Förderband ein wieder verwendbares Band ist und/oder daß jede Abdeckfolie eine wieder verwendbare Folie ist, wobei für jedes Förderband und/oder für jede Abdeckfolie eine Reinigungsstation im oder am Laminator oder als separate Station vorgesehen ist. Bei dieser Ausführung wird jedes Förderband und/oder jede Abdeckfolie für eine Vielzahl von Laminiervorgängen verwendet, wodurch ein Ersatz von Förderbändern oder Abdeckfolien nur nach Eintritt von Schäden am Förderband oder der Abdeckfolie erforderlich wird. Anhaftende Verunreinigungen, z.B. während des Laminiervorganges verflüssigte Kunststofftropfen, die am Förderband oder an der Abdeckfolie haften, werden in der erwähnten Reinigungsstation entfernt, so daß für einen weiteren Laminiervorgang wieder ein sauberes Förderband bzw. eine saubere Abdeckfolie zur Verfügung steht.

Für die erwähnte Reinigungsstation ist bevorzugt vorgesehen, daß diese mindestens eine drehantreibbare Reinigungsbürste und mindestens einen Reinigungsschaber umfaßt, die jeweils in Wirkeingriff mit der Seite/den Seiten des Förderbandes und/oder der Abdeckfolie bringbar sind, die beim Laminiervorgang mit den Laminatschichten in Kontakt tritt/treten. Mit dieser Kombination von Reinigungsbürste und Reinigungsschaber oder jeweils mehreren derartigen Reinigungsinstrumenten wird gewährleistet, daß das zu reinigende Förderband oder die zu reinigende Abdeckfolie nach Durchlaufen der Reinigungsstation sauber und frei von einem nachfolgenden Laminiervorgang störenden Verunreinigungen oder Anhaftungen ist.

Alternativ ist vorgesehen, daß jedes Förderband ein nur einmal verwendbares Band ist und/oder daß jede Abdeckfolie eine nur einmal verwendbare Folie ist, wobei das Band und/oder die Folie nach ihrer Verwendung entsorgbar und durch ein frisches Band und/oder durch eine frische Folie ersetzbar sind. In dieser Ausführung wird eine besonders hohe Oberflächenqualität des fertig laminierten Bauteils gewährleistet, weil in jedem Falle frisches Material für das Förderband und/oder für die Abdeckfolie zum Einsatz kommt, das prinzipiell zuvor noch nicht mit anderen Bauteilen und deren Laminatschichten in Kontakt gekommen ist. Eine Reinigung des Bandes oder der Folie ist in dieser Ausführung nicht erforderlich.

Im folgenden werden Ausführungsbeispiele der Erfindung anhand einer Zeichnung erläutert. Die Figuren der Zeichnung zeigen:
- Figur 1: einen ersten Laminator in Seiteneinsicht, teils in Vertikalschnitt, in einem ersten Betriebszustand,
- Figur 2: den Laminator aus Figur 1 in gleicher Darstellung in einem zweiten Betriebszustand,
- Figur 3: einen vergrößerten Ausschnitt aus dem Inneren des Laminators gemäß Figur 1 im Vertikalschnitt,
- Figur 4: einen vergrößerten Ausschnitt aus dem Inneren des Laminators gemäß Figur 2, ebenfalls im Vertikalschnitt,
- Figur 5: einen vergrößerten Ausschnitt aus einem zweiten Laminator in einem ersten Betriebszustand im Vertikalschnitt,
- Figur 6: den Ausschnitt gemäß Figur 5, nun in einem zweiten Betriebszustand in gleicher Darstellung,
- Figur 7: eine dritte Ausführung des Laminators mit einer Fördereinrichtung, in einem ersten Betriebszustand, in Seitenansicht, teils im Vertikalschnitt,
- Figur 8: den Laminator mit Fördereinrichtung aus Figur 7 in gleicher Darstellung in einem zweiten Betriebszustand,
- Figur 9: den Laminator mit Fördereinrichtung gemäß Figur 7 und Figur 8 in Draufsicht,
- Figur 10: den Laminator gemäß Figur 7 in gleicher Darstellung und in gleichem Betriebszustand, nun mit einer Reinigungsstation für die Fördereinrichtung,
- Figur 11: den Laminator in einer weiteren Ausführung, ebenfalls mit einer Fördereinrichtung, teils in Seitenansicht, teils im Vertikalschnitt,
- Figur 11a: ein vergrößertes Detail aus der Fördereinrichtung gemäß Figur 11 in Seitenansicht,
- Figur 12: den Laminator aus Figur 11 in Draufsicht,
- Figur 13: eine weitere Ausführung des Laminators mit einer geänderten Fördereinrichtung, teils in Seitenansicht, teils im Vertikalschnitt,
- Figur 13a: ein vergrößertes Detail der Fördereinrichtung gemäß Figur 13 in Seitenansicht und
- Figur 14: den Laminator aus Figur 13 in Draufsicht.

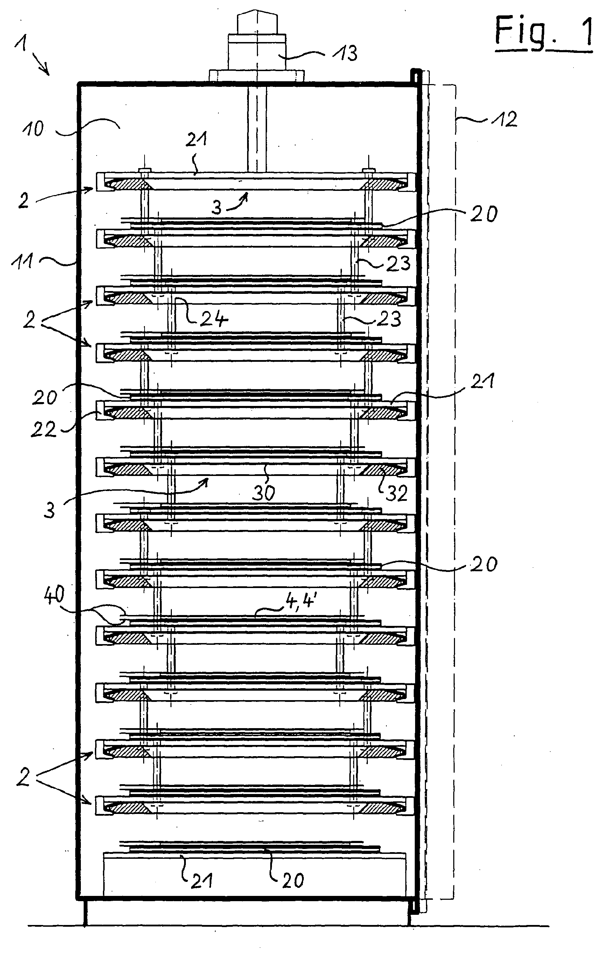

Der in Figur 1 dargestellte erste Laminator 1 umfaßt eine Laminierkammer 10, die durch einen Vakuumschrank 11 gebildet ist. Die in Figur 1 rechte Seitenwand des Vakuumsschranks 11 ist als verstellbare, z.B. verschiebbare oder verschwenkbare Tür 12 ausgebildet. In Figur 1 befindet sich die Tür 12 in ihrer Öffnungsstellung, in der sie die rechte Seite des Vakuumschranks 11 freigibt, und ist deshalb nur in gestrichelten Linien dargestellt.

Im Inneren der Laminierkammer 10 ist eine Anzahl von Laminierplatten 2 übereinander angeordnet. In dem in Figur 1 gezeigten Betriebszustand haben die Laminierplatten 2 jeweils einen Abstand voneinander.

Die Laminierplatten 2 sind untereinander über Verbindungsglieder 23 verbunden, die hier die Form von vertikal verlaufenden Zugstangen haben. Die Verbindungsglieder 23 verlaufen jeweils durch Durchbrechungen 24 in jeweils zwei einander benachbarten Laminierplatten 2. Durch je einen vergrößerten Kopf an den beiden Enden der Verbindungsglieder ist eine begrenzte vertikale Bewegung je zweier benachbarter Laminierplatten 2 relativ zueinander möglich.

An der in Figur 1 oberen Laminierplatte 2 greift eine Hubeinrichtung 13 an, die z.B. durch eine Spindel oder eine Kolben-Zylinder-Anordnung gebildet ist. Mittels dieser Hubeinrichtung 13 werden die Laminierplatten 2 in ihrer in Figur 1 sichtbaren, voneinander beabstandeten Position gehalten, wobei jeweils eine Laminierplatte 2 die darunter folgende Laminierplatte über die Verbindungsglieder 23 hält.

Die Laminierplatten 2 umfassen, abgesehen von der oberen und der unteren Laminierplatte, jeweils oben eine Heizplatte 20, darunter einen Plattenrahmen 21 für die Heizplatte 20 und schließlich darunter eine Andrückeinrichtung 3.

Die Andrückeinrichtung 3 ist bei dem Laminator 1 gemäß Figur 1 jeweils durch eine Membran 30 gebildet, die auf einen Membranrahmen 32 dichtend aufgespannt ist. Der Bereich oberhalb jeder Membran 30 ist jeweils durch einen der Plattenrahmen 21, die hier die Form von geschlossenen Platten haben, dicht verschlossen. Über in der Figur 1 nicht eigens dargestellte Kanäle oder Leitungen kann der Raum oberhalb der Membran 30 gezielt evakuiert oder belüftet oder mit einem Druckmedium beschickt werden.

Die obere Laminierplatte 2 umfaßt lediglich den Plattenrahmen 21 und darunter die Andrückeinrichtung 3; ganz unten im Laminator 1 befindet sich auf einem Plattenrahmen 21 eine Heizplatte 20.

In dem in Figur 1 gezeigten geöffneten Zustand des Vakuumschranks 11 können plattenförmige Bauteile 4 zusammen mit damit zu verbindenden Laminatschichten 4' in das Innere des Laminators 1 gebracht und in einer Laminierposition auf den Heizplatten 20 der Laminierplatten 2 abgelegt werden. Dieser Zustand mit eingelegten zu laminierenden Bauteilen 4 und zugehörigen Laminatschichten 4' ist in Figur 1 dargestellt.

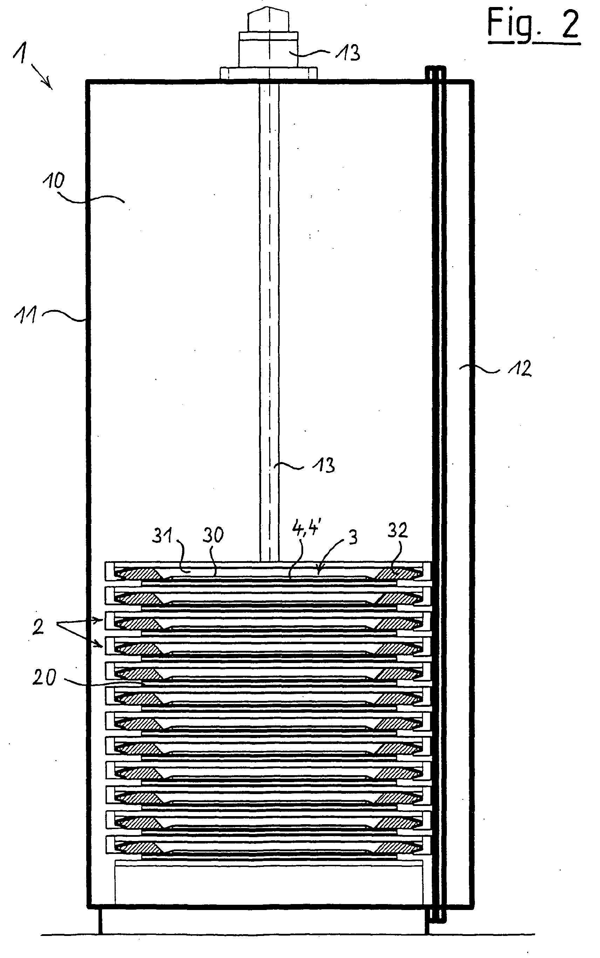

Zur Durchführung eines Laminiervorganges wird der Vakuumschrank 11 durch Schließen der Tür 12 verschlossen. Dadurch ist die Laminierkammer 10 luftdicht abgeschlossen und kann dann durch eine hier nicht dargestellte Vakuumpumpe in benötigter Weise evakuiert werden. Durch Aktivierung der Hubeinrichtung 13 werden die einzelnen Laminierplatten 2 nach unten verfahren und in ihrer zusammen gefahrenen Position, wie sie die Figur 2 zeigt, durch die Hubeinrichtung 13 fixiert. Durch Belüften der zuvor evakuierten Kammern 31 oberhalb der Membranen 30 üben die Membranen 30 als Andrückeinrichtung 3 eine flächige Andrückkraft auf das jeweils unter der Membran 30 liegende Bauteil 4 mit seinen Laminatschichten 4' aus. Gleichzeitig wird das Bauteil 4 mit seinen Laminatschichten 4' von unten her durch die jeweils darunter liegende Heizplatte 20 erhitzt, wodurch unter Anwendung von Wärme und Andrückkraft der Laminiervorgang abläuft.

Nach einer ausreichenden Laminierzeit wird die Hubeinrichtung 13 betätigt und die Laminierkammer 10 belüftet. Hierdurch gelangt der Laminator 1 wieder in den Zustand, den die Figur 1 zeigt. Nach Öffnen der Tür 12 können die nun fertig laminierten Bauteile 4 von den einzelnen Heizplatten 20 der Laminierplatten 2 entnommen werden. Danach kann ein neuer Laminiervorgang mit dem gleichzeitigen Laminieren von mehreren Bauteilen 4 beginnen.

Die Figuren 1 und 2 veranschaulichen deutlich, daß der Laminator 1 für das gleichzeitige Laminieren von mehreren Bauteilen 4, hier im Beispiel insgesamt zwölf Bauteile 4, keine größere Stellfläche braucht als ein Laminator mit nur einer Heizplatte 20 und einer zugehörigen Andrückeinrichtung 3.

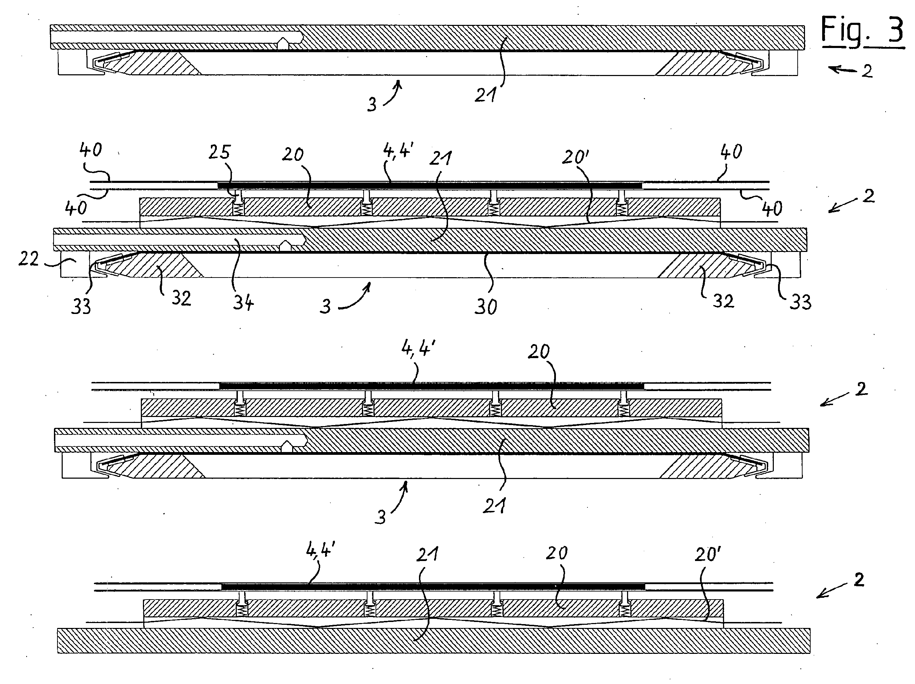

Figur 3 zeigt in vergrößerter Darstellung die obere, die untere und zwei von den dazwischenliegenden Laminierplatten 2 des Laminators gemäß Figur 1 in einer vergrößerten Darstellung.

Die obere Laminierplatte 2 gemäß Figur 3 besteht nur aus dem Plattenrahmen 21 und aus der darunter angeordneten Andrückeinrichtung 3. Die untere Laminierplatte 2 umfaßt einen Plattenrahmen 21 und darüber eine Heizplatte 20 mit einer zugehörigen Heizeinrichtung 20', die beispielsweise elektrisch oder in einer alternativen Ausführung mittels einer heißen Flüssigkeit betreibbar ist.

Die zwei dargestellten dazwischenliegenden Laminierplatten 2 umfassen jeweils als tragendes Teil einen Plattenrahmen 21, auf dessen Oberseite jeweils eine Heizplatte 20 mit der zugehörigen Heizeinrichtung 20' angeordnet ist. An der Unterseite jedes Plattenrahmens 21 ist je eine der Andrückeinrichtungen 3 angeordnet.

Zusätzlich ist die Heizplatte 20 im Beispiel gemäß Figur 3 mit Hubelementen 25 in Form von senkrecht zur Heizplattenebene verlaufenden Hubstiften ausgestattet. Diese Hübelemente 25 sind durch Federkraft in Ausschubrichtung nach oben aus der oberen Fläche der Heizplatte 20 vorbelastet.

Auf den Hubelementen 25 liegt in dem in Figur 3 dargestellten Betriebszustand ein zu laminierendes Bauteil 4 mit seinen Laminatschichten 4' auf. Unterseitig und oberseitig ist hier außerdem das Bauteil 4 mit seinen Laminatschichten 4' von einer unteren und einer oberen Abdeckfolie 40 bedeckt. Durch die Hubelemente 25 wird das von den Abdeckfolien 40 beidseitig bedeckte Bauteil 4 mit seinen Laminatschichten 4' auf Abstand von der heißen Heizplatte 20 gehalten. Ein Absenken der Bauteile 4 mit ihren Laminatschichten 4' und ihren Abdeckfolien 40 auf die Oberfläche der heißen Heizplatte 20 erfolgt erst durch das Zusammenfahren der Laminierplatten 2.

Die Andrückeinrichtungen 3 umfassen jeweils neben der Membran 30 einen Membranrahmen 32, auf den die Membran 30 mittels eines Randprofils 33 werkzeuglos oder mittels Werkzeugeinsatzes dichtend aufgespannt ist. Der Membranrahmen 32 mit der aufgespannten Membran 30 ist in einer Schiebeführung 22 gehalten und parallel zur Flächenebene der Membran 30 und senkrecht zur Zeichnungsebene verschiebbar. Auf diese Weise kann der Membranrahmen 32 mit der Membran 30 einfach von der Laminierplatte 2 durch Herausziehen getrennt werden, um einen schnellen Austausch der Membran 30 bei Bedarf zu ermöglichen.

Oberhalb der Membran 30 befindet sich ein Luftkanal 34, der mit einem Bereich oberhalb der Membran 30 und unterhalb des gegen die Membran 30 abgedichteten, plattenförmigen Plattenrahmens 21 mündet. Durch den Luftkanal 34 kann der Bereich oberhalb der Membran 30 evakuiert werden, wie dies in Figur 3 dargestellt ist. Bei Bedarf kann durch den Luftkanal 34 Luft oder ein anderes Druckmedium zugeführt werden, um die Membran nach unten hin auszulenken und mit einer nach unten wirkenden Kraft zu beaufschlagen.

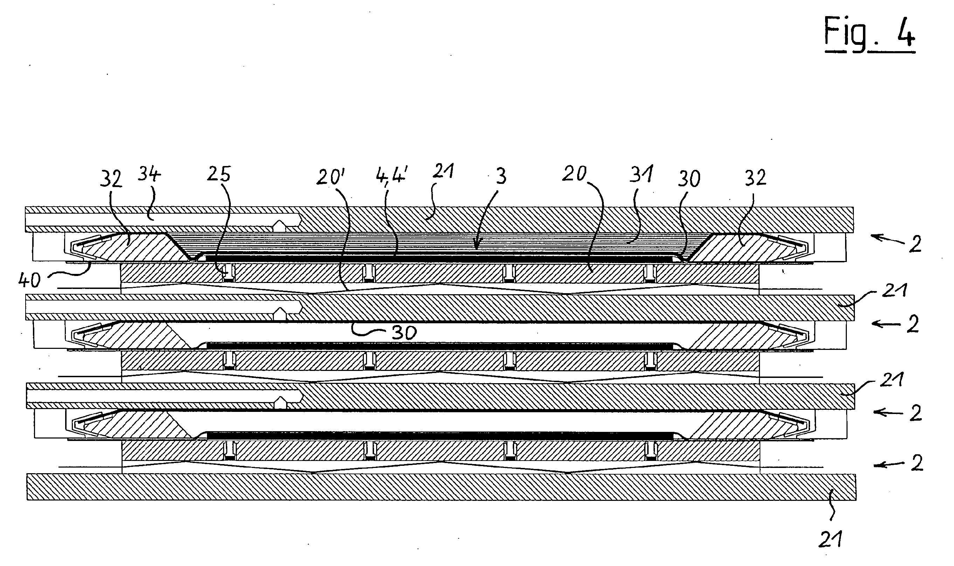

Figur 4 der Zeichnung zeigt die vier Laminierplatten 2 aus Figur 3 nun in ihrem zusammen gefahrenen Zustand. In diesem Zustand liegt jeweils eine Laminierplatte 2 auf der nach unten benachbarten Laminierplatte 2 auf. Einen Anschlag für diese Auflage bildet dabei jeweils der Membranrahmen 32, der auf der Oberseite des Randbereichs der Heizplatte 20 aufliegt.

Wie die Figur 4 weiter zeigt, ist hier der Bereich oberhalb der oberen Membran 30 belüftet, wodurch sich hier eine nun mit Luft gefüllte Membrankammer 31 ausbildet. Die Umgebung der Laminierplatten 2 ist, wie anhand von Figur 2 erläutert, für den Laminiervorgang evakuiert, so daß für das Füllen der Membrankammer 31 mit Luft das Einlassen von Luft unter atmosphärischem Luftdruck genügt. Hierdurch wird die Membran 30 in der in Figur 4 in der oberen Laminierplatte 2 gezeigten Form nach unten gedrückt und übt eine flächige Andrückkraft auf das Bauteil 4 mit seinen Laminatschichten 4' und seinen Abdeckfolien 40 aus.

Durch das Zusammenfahren der Laminierplatten 2 sind die Hubelemente 25 gegen die Kraft der darunter vorgesehenen Federn in die Heizplatten 20 eingeschoben, wodurch nun die Bauteile 4 mit ihren Laminatschichten 4' und den Abdeckfolien 40 in flächige Anlage an die Heizplatten 20 gelangen. Durch die Einwirkung der Wärme aus den Heizplatten 20 und der Andrückkraft der Andrückeinrichtung 3 wird jeweils das Bauteil 4 mit seinen Laminatschichten 4' blasenfrei und fest verbunden. Nach Abschluß des Laminiervorganges werden die Laminierplatten 2 wieder auf ihren in Figur 3 gezeigten Abstand auseinander gefahren. Mittels der Hubelemente 25 werden die nun laminierten Bauteile 4 wieder von den Heizplatten 20 abgehoben. Nach Belüften des in Figur 3 und 4 nicht eigens dargestellten Vakuumschranks 11 kann dieser geöffnet werden und die fertig laminierten Bauteile 4 können zwischen den Laminierplatten 2 herausgenommen werden.

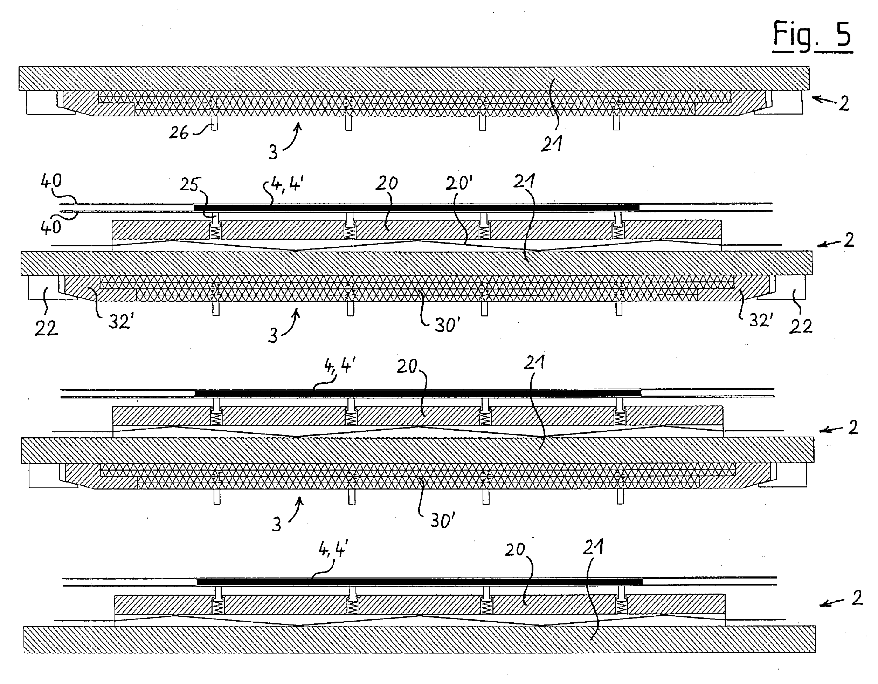

Figur 5 der Zeichnung zeigt in gleicher Darstellungsweise wie die Figur 3 eine geänderte Ausführung des Laminators. Diese Änderung betrifft die Art der Andrückeinrichtung 3. Bei dem Beispiel in Figur 5 ist die Andrückeinrichtung 3 jeweils durch eine mit einem komprimierbaren, selbstrückstellenden Material 30' hinterlegte Membran gebildet, die zweckmäßig aus einem elastisch-flexiblen Material besteht.

Weiterhin zeigt die Figur 5 an jeder Laminierplatte 2 von dieser nach unten vorstehende Niederhaltestifte 26, die passend zu den Hubelementen 25 angeordnet sind. Diese Niederhaltestifte 26 dienen dazu, beim Zusammenfahren der Laminierplatten 2 die jeweils unter ihnen liegenden Hubelemente 25 in die zugehörige Heizplatte 20 zu bewegen.

Die mit dem Material 30' hinterlegte Membranen sind hier einschließlich des Materials 30' jeweils in einem eigenen Halterahmen 32' gehalten, der seinerseits jeweils werkzeuglos einbaubar und ausbaubar in einer Schiebeführung 22 an der Unterseite des Plattenrahmens 21 jeder Laminierplatte 2 gehalten ist; damit ist bei Bedarf ein sehr schneller Austausch bei Beschädigung oder Verschleiß möglich.

Im übrigen entsprechen die Laminierplatten 2 gemäß Figur 5 den Laminierplatten 2 gemäß Figur 3.

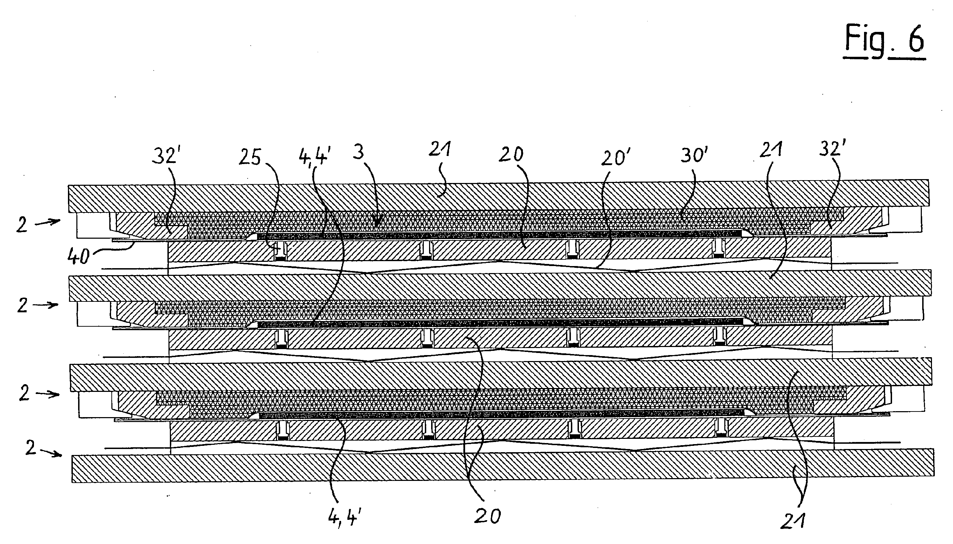

Figur 6 zeigt die Laminierplatten 2 aus Figur 5 nun in ihrem zusammen gefahrenen Zustand. In diesem Zustand liegt jeweils eine Laminierplatte 2 dicht an ihrer benachbarten Laminierplatte 2 an. Dabei bildet jeweils der Halterahmen 32' einen definierten Anschlag für diese zusammen gefahrene Stellung der Laminierplatten 2. In diesem Zustand üben jeweils die mit dem Material 30' hinterlegten Membranen eine flächige Andrückkraft auf jedes Bauteil 4 mit seinen Laminatschichten 4' und seinen Abdeckfolien 40 aus. Die Hubelemente 25 sind in diesem Zustand in die Heizplatten 20 zurückgeschoben, so daß nun das Bauteil 4 mit seinen Laminatschichten 40 vollflächig auf der jeweils zugehörigen Heizplatte 20 aufliegt.

Auch im Beispiel gemäß Figur 5 und Figur 6 sind die Andrückeinrichtungen 3 in einem ausreichenden Maß elastisch-flexibel, so daß sie sich, wie Figur 6 veranschaulicht, an die Form des Bauteils 4 und an dessen Dicke anpassen. Durch Wahl der Festigkeit und der Dicke des elastisch-flexiblen Materials 30' der Andrückeinrichtungen 3 kann die auf das Bauteil 4 und seine Laminatschichten 4' ausgeübte Andrückkraft festgelegt werden.

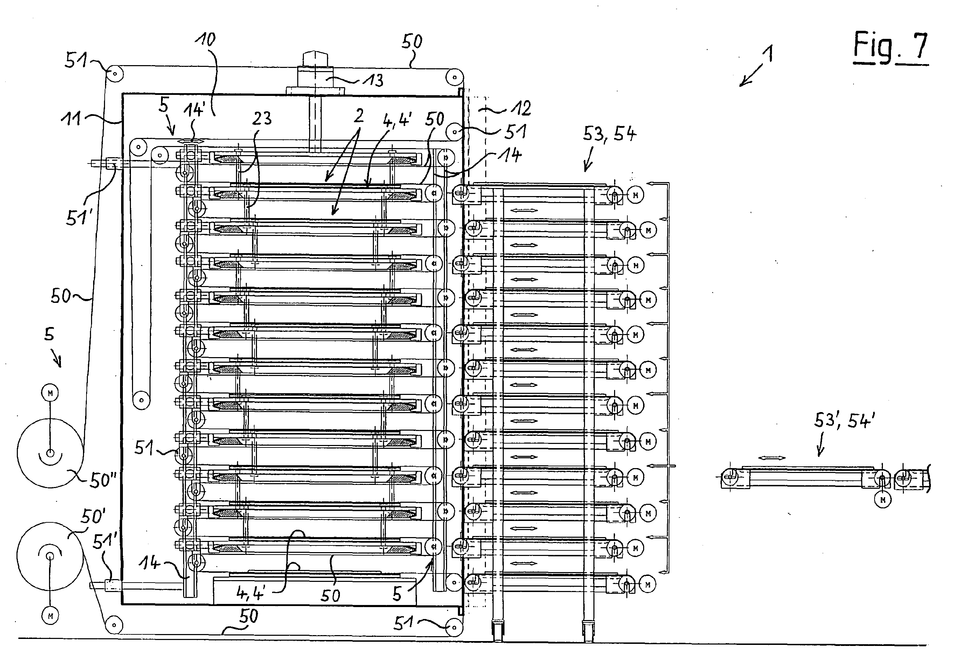

Figur 7 zeigt eine weitere Ausführung des Laminators 1, der nun mit einer Fördereinrichtung 5 ausgestattet ist, die ein automatisches Beladen des Laminators 1 mit zu laminierenden Bauteilen 4 und Entladen von laminierten Bauteilen 4 aus dem Laminator 1 gestattet.

Im linken Teil der Figur 7 ist die Laminierkammer 10 dargestellt, die auch hier durch einen Vakuumschrank 11 gebildet ist. Die in Figur 7 rechte Seitenwand des Vakuumschranks 11 ist als verschiebbare Tür 12 ausgebildet, die sich hier in ihrer Öffnungsstellung befindet, in der sie nach hinten verschoben ist.

Im Inneren der Laminierkammer 10 sind wieder mehrere Laminierplatten 2 übereinander angeordnet, die in Figur 7 in einem Betriebszustand gezeigt sind, in dem sie Abstand voneinander aufweisen. In diesem Zustand kann ein Beladen oder Entladen des Laminators 1 erfolgen.

Zur Beschleunigung des Beladens und Entladens des Laminators 1 umfaßt dessen Fördereinrichtung 5 zwei Bauteilespeicher 53, 54, die wahlweise vor der offenen Seite der Laminierkammer 10 positioniert werden können. Jeder Bauteilspeicher 53, 54 nimmt eine der Anzahl der Laminierplatten 2 im Laminator 1 entsprechende Anzahl von zu laminierenden Bauteilen 4 oder fertig laminierten Bauteilen 4 in einem dem Abstand der Laminierplatten 2 in deren auseinander gefahrenem Zustand entsprechenden Höhenabstand voneinander auf. Hierdurch können allein durch rein horizontale Transportbewegung alle zu laminierenden Bauteile gleichzeitig in den Laminator 1 hineintransportiert oder gleichzeitig nach dem Laminiervorgang aus dem Laminator 1 herausgefördert werden.

Für die Förderung der zu laminierenden Bauteile 4 einschließlich der zugehörigen Laminatschichten und der fertigen Bauteile 4 umfaßt die der Laminierkammer 10 zugeordnete Fördereinrichtung 5 ein Förderband 50. Das Förderband 50 wird von einer Vorratsrolle 50', die außerhalb des Vakuumsschranks 11 angeordnet ist, abgewickelt. In seinem weiteren Verlauf gelangt das Förderband 50 an der offenen Seitenwand in das Innere der Laminierkammer 10 und durchläuft diese mäanderförmig. Dabei überstreicht das Förderband 50 jede Laminierplatte 2 parallel zu deren Oberseite und parallel zu deren Unterseite. Innerhalb der Laminierkammer 10 sind dazu entsprechende Umlenkrollen 51 links und rechts von den Laminierplatten 2 angeordnet. Schließlich verläßt das Förderband 5 am oberen Ende der Laminierkammer 10 diese durch die offene Seite und wird über weitere Umlenkrollen 51 zu einer Sammelrolle 50'' für das Förderband 50 geführt, wo das Förderband 5 nach seiner Verwendung aufgewickelt wird.

Die Bauteilespeicher 53, 54 besitzen mehrere endlose Förderbänder, die jeweils mit ihrer Oberseite die Auflagefläche für ein zu laminierendes Bauteil 4 einschließlich seiner Laminatschichten 4' bzw. für ein fertig laminiertes Bauteil 4 bilden.

In der in Figur 7 gezeigten geöffneten Stellung der Tür 12 wird der Bauteilespeicher 53, 54 so plaziert, daß seine einzelnen Förderbänder in unmittelbarer Gegenüberstellung zu den einzelnen Laminierplatten 2 stehen. In dieser Position kann dann durch Aktivierung der Fördereinrichtung 5 und der einzelnen Förderbänder im Bauteilespeicher 53, 54 die Übergabe der Bauteile 4 entweder aus dem Bauteilespeicher 53, 54 auf die Laminierplatten 2 oder umgekehrt von den Laminierplatten 2 in den Bauteilespeicher 53, 54 erfolgen.

Das Förderband 50, das hier die Laminierkammer 10 mäanderförmig durchläuft, kann gleichzeitig als Abdeckfolie für die Unterseite und Oberseite der zu laminierenden Bauteile 4 während des Laminiervorganges genutzt werden, da das Förderband 50 auf der einen Seite zwischen der Heizplatte 20 und dem Bauteil 4 und auf der anderen Seite zwischen der Andrückeinrichtung 3 und dem Bauteil 4 liegt.

Für die vertikale Führung der Laminierplatte 2 mit den zugehörigen, damit verbundenen Umlenkrollen 51 für das Förderband 50 dient bei dem Laminator 1 gemäß Figur 7 eine Vertikalführung 14, die etwa an den vier Ecken der Laminierplatten 2 vorgesehen ist.

Um die Spannung des Förderbandes 50 beeinflussen und gezielt verändern zu können, ist eine Bandspanneinheit 51' vorgesehen, die hier links oben und links unten am Vakuumschrank 11 liegt und die auf die in Figur 7 linken Vertikalführungen 14 einwirkt, um diese gemäß dem links oben in Figur 7 eingezeichneten Doppelpfeil 14' im Sinne eines Entspannens oder Anspannens des Bandes 5 zu verschieben.

Ganz rechts in Figur 7 ist noch ein Teil einer Zuführstrecke oder Abführstrecke 53', 54' erkennbar. Diese dient dazu, zu laminierende Bauteile 4 oder fertig laminierte Bauteile 4 dem Bauteilespeicher 53, 54 zuzuführen bzw. von diesen wegzuführen.

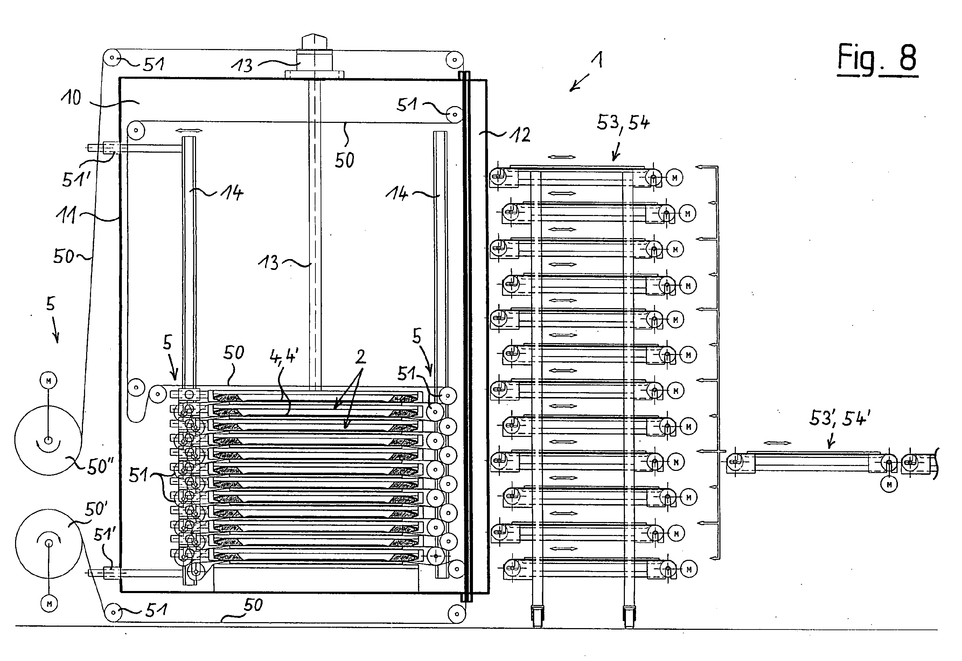

Figur 8 zeigt den Laminator 1 aus Figur 7 in seinem Zustand während eines Laminiervorganges. Hierzu sind die Laminierplatten 2 in ihre zusammen gefahrene Stellung bewegt, wozu die Hubeinrichtung 13 eingesetzt wird. Die den einzelnen Laminierplatten 2 zugeordneten Umlenkrollen 51 und das Förderband 50 werden dabei gemeinsam mit den Laminierplatten 2 nach unten gefahren. Durch Betätigen der Bandspanneinheit 51' im Sinne einer Entspannung des Förderbandes 50 erhält dieses so viel Freiraum, daß es das Ausüben der Andrückkraft auf die Bauteile 4 mit ihren Laminatschichten 4' während des Laminiervorganges nicht behindert. Während des Laminiervorganges ist der Bauteilespeicher 53, 54 auf einen größeren Abstand von dem Vakuumschrank 11 gebracht, so daß nun die Tür 12 den Vakuumschrank 11 dicht verschließt. Durch nicht eigens dargestellte Mittel ist die Laminierkammer 10 für den Laminiervorgang evakuiert.

Während in der Laminierkammer 10 ein Laminiervorgang abläuft, kann außerhalb des Vakuumsschranks 11 gleichzeitig ein zweiter Bauteilespeicher 53, 54 mit einem neuen Satz von zu laminierenden Bauteilen bestückt werden.

Das Förderband 50 der Fördereinrichtung 5 steht während des Laminiervorganges still. In diesem Zustand liegt das Förderband 50 unten und oben zwischen der Tür und dem übrigen Vakuumschrank 11. Da bei geschlossener Tür 12 keine Bewegung des Förderbandes 5 erforderlich ist, kann das Förderband 50 einfach zwischen Tür 12 und übrigem Vakuumschrank 11 dichtend eingeklemmt werden.

Nach Beendigung des Laminiervorganges werden die einzelnen Laminierplatten 2 durch Aktivierung der Hubeinrichtung 13 wieder in ihre auseinander gefahrene Stellung gebracht, wie sie die Figur 7 zeigt. Nach Belüften der Laminierkammer 10 kann die Tür 12 geöffnet werden. Danach können die fertig laminierten Bauteile 4 an den Bauteilespeicher 53, 54 oder an einen von mehreren Bauteilespeichern 53, 54 übergeben und dann über die Abführstrecke 54' abgeführt werden. Nach erneuter Beladung der einzelnen Laminierplatten durch Übergabe von zu laminierenden weiteren Bauteilen 4 aus dem Bauteilespeicher 53, 54 kann ein neuer Laminiervorgang ablaufen.

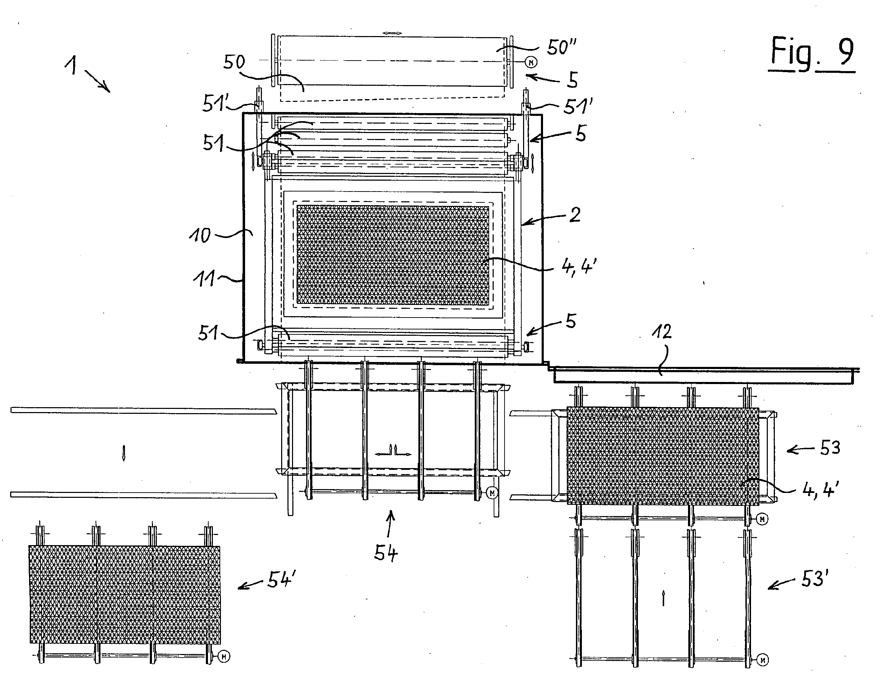

Figur 9 der Zeichnung zeigt den Laminator 1 aus Figur 7 und Figur 8 in Draufsicht. Oben in Figur 9 ist der Vakuumschrank 10 sichtbar, der die Laminierkammer 10 begrenzt. Zur Sichtbarmachung des Inneren des Vakuumschranks 11 ist hier dessen obere Wand weggelassen.

Im Inneren der Laminierkammer 10 ist eine der Laminierplatten 2 mit einem darauf angeordneten, zu laminierenden Bauteil 4 mit seinen Laminatschichten 4' erkennbar. Vor und hinter der Laminierplatte 2, d.h. in Figur 9 unterhalb und oberhalb der Laminierplatte 2, sind einige der Umlenkrollen 51 für die Führung des Förderbandes 50 erkennbar. Vorne, d.h. in Figur 9 unten, ist der Vakuumschrank 11 offen und mittels der hier in ihrer Öffnungsstellung befindlichen Tür 12, die hier eine Schiebetür ist, verschließbar.

An der Rückseite des Vakuumschranks 11 sind die Bandspanneinheiten 51' sichtbar, die zur Veränderung der Spannung des Förderbandes 50 innerhalb der Laminierkammer 10 dienen. Ganz oben in Figur 9 ist hinter dem Vakuumschrank 11 die Sammelrolle 50'' für das Aufwickeln des Förderbandes 50 nach dessen Gebrauch in der Laminierkammer 10 sichtbar.

Wie Figur 9 besonders deutlich zeigt, werden hier zwei Bauteilespeicher 53, 54 eingesetzt, wobei der Bauteilespeicher 53 ein Vorratsspeicher für das Beladen der Laminierkammer 10 und der Bauteilespeicher 54 ein Entladespeicher für das Entladen der Laminierkammer 10 ist.

In dem in Figur 9 gezeigten Betriebszustand des Laminators 1 steht der Bauteilespeicher 54 als Entladespeicher vor der geöffneten Seite des Vakuumschranks 11. In dieser Stellung können alle fertig laminierten Bauteile 4 aus dem Inneren des Vakuumschranks 11 gleichzeitig von den Laminierplatten 2 an den Bauteilespeicher 54 mittels der Fördereinrichtung 5 übergeben werden.

Nach Überführen der fertig laminierten Bauteile 4 in den Bauteilespeicher 54 wird dieser gemäß Figur 9 nach links verfahren, wodurch der Platz vor der offenen Seite des Vakuumsschranks 11 frei wird. Hierhin kann dann der andere Bauteilespeicher 53 verfahren werden, der zuvor über die Zuführstrecke 53' mit zu laminierenden Bauteilen 4 einschließlich der zugehörigen Laminatschichten 4' beladen worden ist. Aus dem dann unmittelbar vor der offenen Seite des Vakuumsschranks 10 stehenden Bauteilespeicher 53 können die zu laminierenden Bauteile 4 in das Innere der Laminierkammer 10 überführt werden. Nach Schließen der Tür 12 kann dann der Laminiervorgang im Inneren des Vakuumsschranks 11 ablaufen. Während der Zeit, die der Laminiervorgang beansprucht, wird der Bauteilespeicher 53 wieder in seine in Figur 9 gezeigte Position verfahren. Gleichzeitig wird der Bauteilespeicher 54 von seiner Übergabeposition in unmittelbarer Nachbarschaft der Abführstrecke 54' wieder in eine Position vor dem Vakuumschrank 11 verbracht. Nach Abschluß des Laminiervorganges im Vakuumschrank 11 kann dann ein erneuter Entlade- und Beladezyklus der vorstehend beschriebenen Art ablaufen.

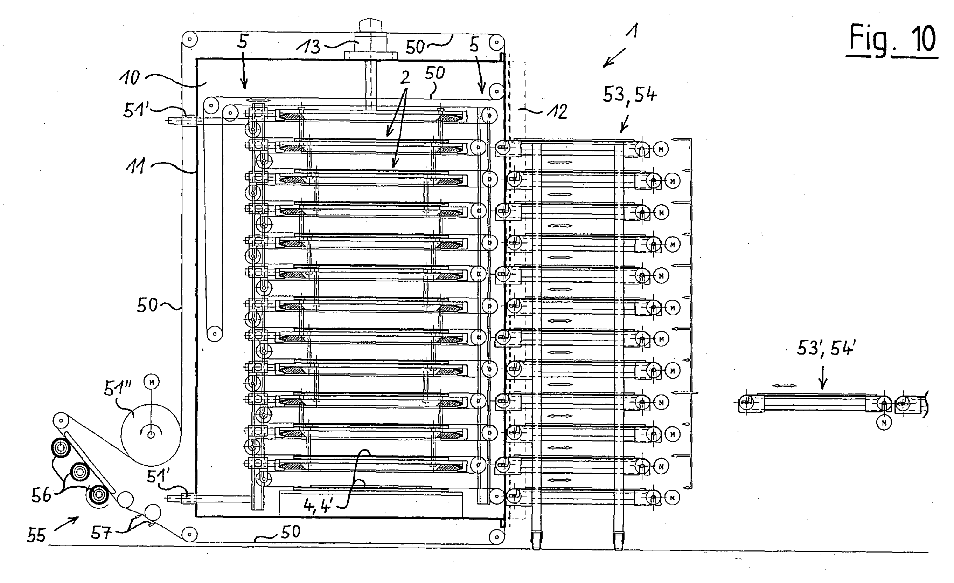

Figur 10 zeigt eine Abwandlung des Laminators 1 gemäß den Figuren 7 bis 9. Die Abwandlung besteht hier darin, daß bei dem Laminator 1 gemäß Figur 10 ein endloses Förderband 50 eingesetzt wird. Die Führung des Förderbandes 50 in einen mäanderförmigen Verlauf durch die Laminierkammer 10 ist gegenüber der Ausführung des Laminators 1 gemäß den Figuren 7 bis 9 unverändert. Unterschiedlich ist, daß zusätzlich eine Reinigungsstation 55 vorgesehen ist, mit der das endlose Förderband 50 nach seinem Austritt aus dem Vakuumschrank 11 und vor seinem erneuten Eintritt in den Vakuumschrank 11 gereinigt werden kann. Insbesondere können mit der Reinigungsstation 55 Anhaftungen vom Förderband 50 entfernt werden, die die Qualität der Oberflächen der laminierten Bauteile 4 beeinträchtigen könnten. Diese Anhaftungen können z.B. Kunststofftropfen sein, die bei dem Laminiervorgang durch Verflüssigung von thermoplastischen Kunststoffen, aus denen die Laminierfolien bestehen, entstehen können.

Im dargestellten Ausführungsbeispiel umfaßt die Reinigungsstation 55 drei hintereinander angeordnete Reinigungsbürsten 56, die durch nicht dargestellte Antriebseinrichtungen drehantreibbar sind, sowie zwei stationäre Reinigungsschaber 57, die sämtlich auf die zu reinigende Oberfläche des Förderbandes 50 einwirken.

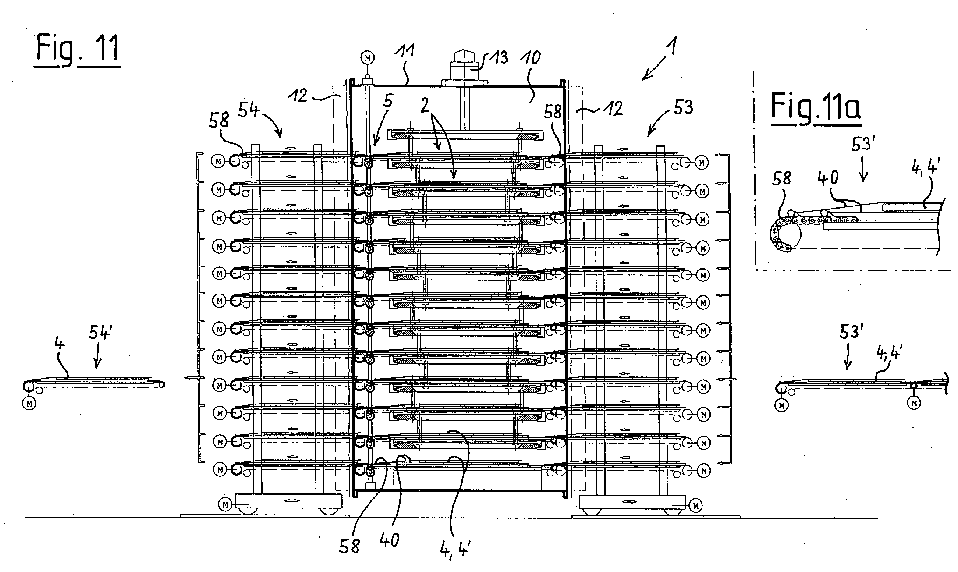

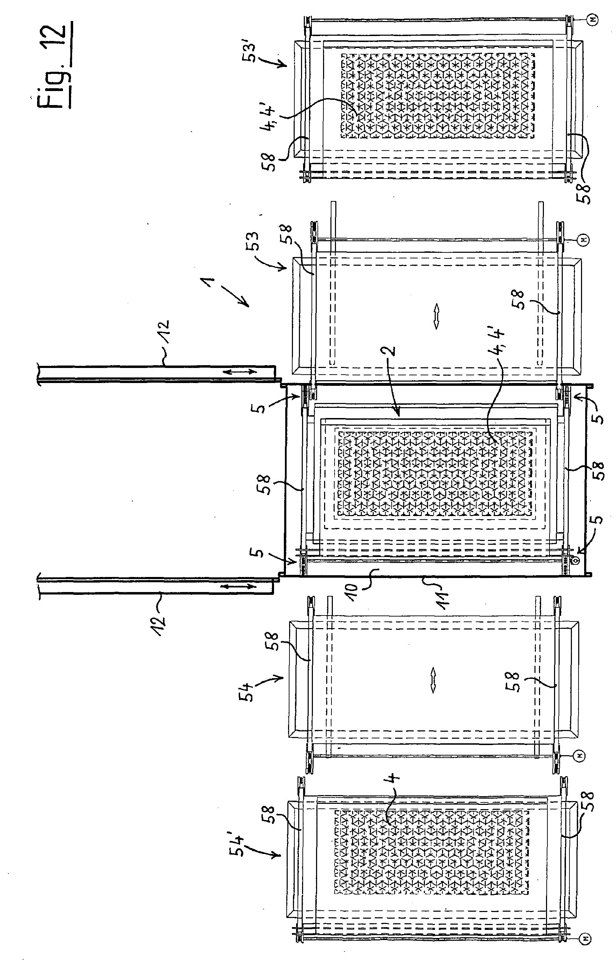

Die Figuren 11, 11a und 12 zeigen eine Ausführung des Laminators 1, bei dem die Fördereinrichtung 5 durch Förderketten 58 gebildet ist. Dabei ist jeder Laminierplatte 2, die auch vertikal verfahrbar übereinander im Inneren der Laminierkammer 10 angeordnet sind, ein Kettenförderer mit zwei parallel zueinander verlaufenden Förderketten 58 zugeordnet.

Eine weitere Änderung des Laminators 1 gemäß den Figuren 11, 11a und 12 besteht darin, daß der Vakuumschrank 11 hier an zwei aneinander gegenüberliegenden Seiten mit je einer verschiebbaren Türen 12 ausgebildet ist. Damit ist eine Förderung der zu laminierenden Bauteile 4 in die Laminierkammer 10 und eine Förderung der fertig laminierten Bauteile 4 aus der Laminierkammer 10 mit einer einheitlichen, gleichen Förderrichtung möglich, wie dies in Figur 11 durch Pfeile angedeutet ist.

An der Beladeseite, d.h. an der gemäß Figur 11 und 12 rechten Seite des Vakuumsschranks 11 ist ein erster Bauteilespeicher 53 als Vorratsspeicher angeordnet. In diesem Bauteilespeicher 53 können zu laminierende Bauteile 4 in einer Höhenlage abgelegt werden, die der Höhenlage der Laminierplatten 2 in deren auseinander gefahrener Stellung entspricht, wie die Figur 11 zeigt. Bei offener Tür 12 an der rechten Seite des Vakuumsschranks 11 können mittels der auch im Bauteilespeicher 53 vorgesehenen Kettenförderer alle zu laminierenden Bauteile 4 gleichzeitig an die Laminierplatten 2 übergeben werden.

Für das Entladen steht an der in Figur 11 linken Seite des Vakuumsschranks 11 ein zweiter Bauteilespeicher 54, der hier als Entladespeicher dient. Auch dieser Bauteilespeicher 54 ist mit Förderketten 58 ausgestattet. Bei geöffneter linker Tür 12 des Vakuumsschranks 11 können durch Aktivierung der Fördereinrichtung 5 mit den diversen Förderketten 58 alle fertig laminierten Bauteile 4 gleichzeitig von den Laminierplatten 2 höhengleich an die einzelnen Etagen des linken Bauteilespeichers 54 übergeben werden.

Für die Zuführung der zu laminierenden Bauteile 4 mit ihren Laminatschichten 4' zum ersten Bauteilespeicher 53 steht auch hier eine Zuführstrecke 53' zur Verfügung. Ein Ausschnitt dieser Zuführstrecke 53 ist in der Figur 11a in vergrößerter Darstellung gezeigt. Rechts in Figur 11a ist noch ein Teil des zu laminierenden Bauteils 4 mit seinen Laminatschichten 4' erkennbar. Weiterhin zeigt die Figur 11a, daß das Bauteil 4 mit seinen Laminatschichten 4' unterseitig und oberseitig mit je einer Abdeckfolie 40 versehen ist. Diese Abdeckfolien 40 dienen dazu, einen unmittelbaren Kontakt des Bauteils 4 und der Laminatschichten 4' mit der Heizplatte 20 und der Andrückeinrichtung 3 der Laminierplatten 2 zu vermeiden.

Die Abdeckfolien 40 sind an ihrem jeweils vorderen, d.h. in Figur 11a linken Ende mit Haltemitteln, z.B. Stäben versehen, die in Eingriff mit der Förderkette 58 der Zuführstrecke 53 bringbar sind, wodurch dann die Abdeckfolien 40 zugleich als Transportfolien für das Bauteil 4 mit seinen Laminatschichten 4' dienen.

Auch bei den weiteren Beförderungsschritten des Bauteils 4 dienen die Abdeckfolien 40 zusätzlich als Transportfolien, die jeweils in Eingriff mit den Förderketten 58 der Fördereinrichtung 5 in der Laminierkammer 10, im Bauteilespeicher 53 und im Bauteilespeicher 54 bringbar sind.

Für die Abförderung der fertig laminierten Bauteile 4 aus dem Bauteilespeicher 54 steht auch hier eine Abführstrekke 54' zur Verfügung, die ganz links in Figur 11 noch teilweise sichtbar ist.

Figur 12 zeigt den Laminator 1 gemäß Figur 11 in Draufsicht, wobei die Anordnung der einzelnen Teile besonders deutlich wird. Im unteren Teil von Figur 12 ist in der Mitte der Vakuumschrank 11 mit der von diesem umschlossenen Laminierkammer 10 sichtbar, wobei eine obere Wand des Vakuumsschranks 11 hier weggelassen ist, um einen Blick in das Innere der Laminierkammer 10 zu ermöglichen. Die beiden Türen 12 des Vakuumsschranks 11 sind je nach hinten, d.h. gemäß Figur 12 nach oben verschoben, so daß die linke und die rechte Seite des Vakuumsschranks 11 hier offen sind.

Rechts vom Vakuumschrank 11 steht der erste Bauteilespeicher 53, der zur Beladung der einzelnen Laminierplatten 2 dient. Rechts von diesen ist die Zuführstrecke 53' erkennbar, die ihrerseits zur Zuführung der zu laminierenden Bauteile 4 und ihrer Laminatschichten 4' sowie der Abdeckfolien 40 und zu deren Verteilung auf die einzelnen Etagen des Bauteilespeichers 53 dient.

Links von dem Vakuumschrank 11 steht der zweite Bauteilespeicher 54 als Entladespeicher. Dieser Bauteilespeicher 54 nimmt nach einem Laminiervorgang die fertig laminierten Bauteile 4 von den einzelnen Laminierplatten 2 auf. Über die ganz links in Figur 12 sichtbare Abführstrecke 54' werden die fertig laminierten Bauteile nach und nach aus dem Bauteilespeicher 54 entnommen und abgefördert.

Wie schon in Figur 11 erläutert, ist die Fördereinrichtung 5 für die Beförderung der zu laminierenden und der laminierten Bauteile 4 durch Förderketten 58 gebildet. Figur 12 zeigt dabei, daß die einzelnen Förderketten 58 jeweils parallel zueinander und in Förderrichtung verlaufend an der Zuführstrecke 53', an dem ersten Bauteilespeicher 53, an den einzelnen Laminierplatten 2, am zweiten Bauteilespeicher 54 und an der Abführstrecke 54' vorgesehen sind.

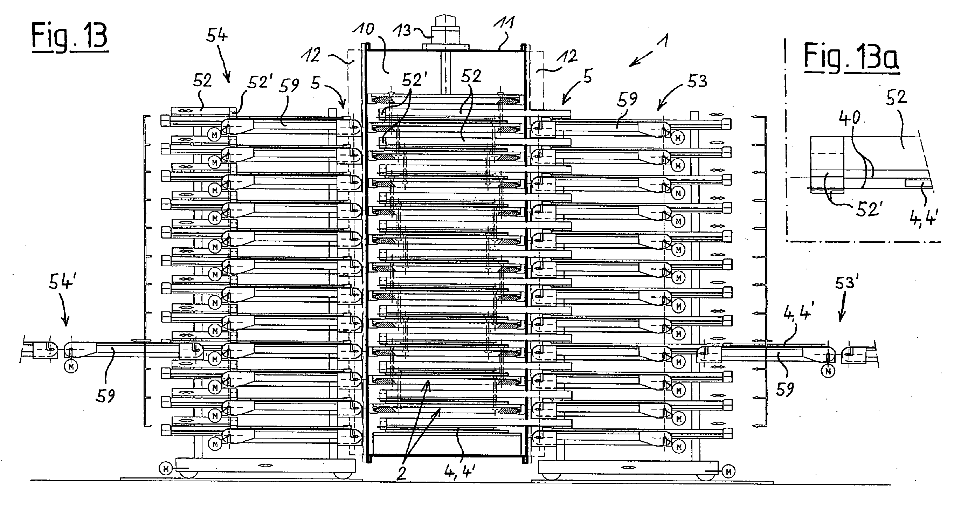

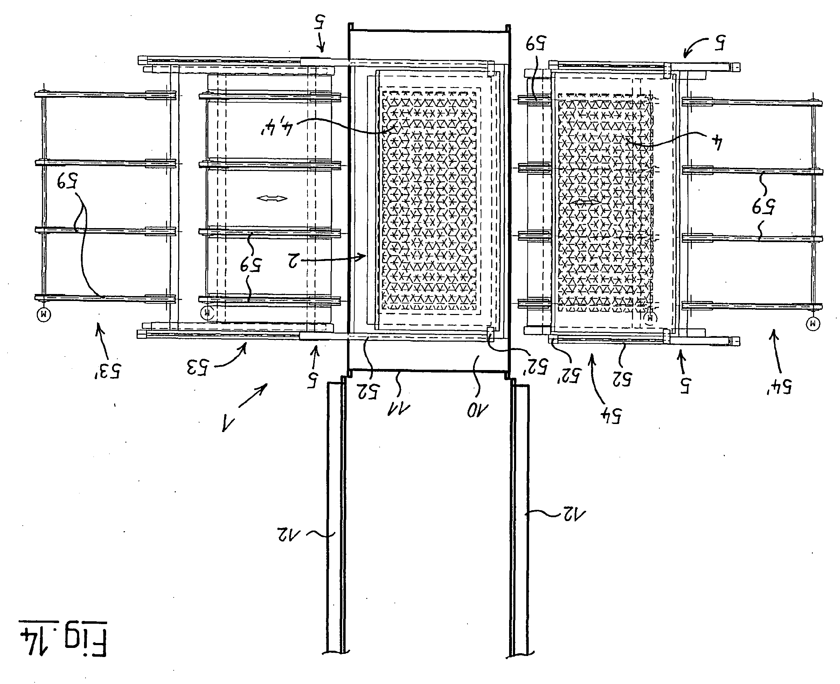

Die Figuren 13, 13a und 14 zeigen in gleicher Darstellungsweise wie die Figuren 11, 11a und 12 eine weitere Ausführung des Laminators 1, bei dem die Fördereinrichtung 5 durch Schieber- und Greiferanordnungen 52, 52' gebildet sind. Dabei sind Schieber-Greiferanordnungen 52, 52' auch hier wieder an der Zuführstrecke 53', an dem ersten Bauteilespeicher 53, an den einzelnen Laminierplatten 2, an dem zweiten Bauteilespeicher 54 und an der Abführstrecke 54' vorgesehen.

Figur 13a zeigt in vergrößerter Darstellung den Endbereich einer Schieber-Greiferanordnung 52, 52'. Der am Ende des Schiebers 52 vorgesehene Greifer 52' ist in der Lage, die beiden Abdeckfolien 40, die unterhalb und oberhalb des Bauteils 4 mit seinen Laminatschichten 4' verlaufen, klemmend zu ergreifen. Durch Verfahren des Schiebers werden dann in gewünschter Richtung die Bauteile 4 mit ihren Laminatschichten 4' mit Hilfe der hier ebenfalls als Transportfolien dienenden Abdeckfolien 40 gefördert.

Im übrigen entsprechen Funktion und Aufbau des Laminators 1 gemäß den Figuren 13, 13a und 14 denjenigen des Laminators 1 gemäß den Figuren 11, 11a und 12.

## Patentansprüche

1. Laminator (1) zum Herstellen von Schichtkörpern, bestehend aus mindestens einer Laminierkammer (10) mit mehreren darin etagenartig angeordneten, beheizbaren Laminierplatten (2), wobei auf jeder Laminierplatte (2) jeweils eine oder mehrere Laminatschichten (4') mit einem Bauteil (4) verschweißbar sind und wobei der Laminator (1) Mittel zum Ausüben einer Andrückkraft auf die Bauteile (4) und die Laminatschichten (4') während des Laminiervorgangs aufweist,
**dadurch gekennzeichnet,**
**daß** pro Laminierplatte (2) je eine Andrückeinrichtung (3) vorgesehen ist, die jeweils durch eine randseitig dicht eingespannte Membran (30) gebildet ist, die an ihrer von einem benachbarten Bauteil (4) und den zugehörigen Laminatschichten (4') abgewandten Seite eine evakuierbare und belüftbare oder mit einem Druckmedium beschickbare oder von einem komprimierbaren und selbstrückstellbaren Material gefüllte Membrankammer (31) begrenzt.

2. Laminator nach Anspruch 1, **dadurch gekennzeichnet, daß** die Laminierkammer (10) durch wenigstens einen Deckel oder eine Tür (12) geöffnet und geschlossen werden kann und im geschlossenen Zustand luftdicht und zur Ausführung eines Laminiervorganges unter Vakuum evakuierbar ist.

3. Laminator nach Anspruch 2, **dadurch gekennzeichnet, daß** alle Laminierplatten (2) und Andrückeinrichtungen (3) in einer einzigen gemeinsamen Laminierkammer (10) angeordnet sind.

4. Laminator nach Anspruch 3, **dadurch gekennzeichnet, daß** die gemeinsame Laminierkammer (10) durch einen Vakuumschrank (11) gebildet ist, in dem die Laminierplatten (2) in horizontaler Ausrichtung angeordnet sind und an dem mindestens eine Seitenwand als verstellbare Tür (12) ausgebildet ist.

5. Laminator nach einem der vorhergehenden Ansprüche, **dadurch gekennzeichnet, daß** die Laminierplatten (2) vertikal bewegbar geführt sind und zwischen einer auseinander gefahrenen Stellung für das Zuführen der Bauteile (4) und der Laminatschichten (4') und für das Abführen der laminierten Bauteile (4) einerseits und einer zusammen gefahrenen Stellung für den Laminiervorgang andererseits verfahrbar sind.

6. Laminator nach Anspruch 5, **dadurch gekennzeichnet, daß** jede Laminierplatte (2) je einen eigenen Plattenrahmen (21) für ihre Halterung aufweist, der jeweils seinerseits in einem in der Laminierkammer (10) angeordneten Führungsrahmen (14), der die vertikale Bewegbarkeit der Laminierplatten (2) ermöglicht, geführt und gehaltert ist.

7. Laminator nach einem der vorhergehenden Ansprüche, **dadurch gekennzeichnet, daß** jede der Laminierplatten (2) mindestens eine Heizplatte (20) aufweist oder umfaßt.

8. Laminator nach Anspruch 5 oder 6 und nach Anspruch 7, **dadurch gekennzeichnet, daß** die Heizplatte (20) jeweils an der Oberseite und die Andrückeinrichtung (3) jeweils an der Unterseite der Laminierplatte (2) angeordnet ist und daß im zusammen gefahrenen Zustand der Laminierplatten (2) mittels der Andrückeinrichtung (3) jeweils in Richtung zu der Heizplatte (20) der darunterliegenden Laminierplatte (2) die Andrückkraft ausübbar ist.

9. Laminator nach einem der vorhergehenden Ansprüche, **dadurch gekennzeichnet, daß** jede Membran (30) auf/in je einen eigenen, von der zugehörigen Laminierplatte (2) trennbaren Membranrahmen (32) dichtend aufgespannt oder aufgeschraubt oder eingespannt ist.

10. Laminator nach Anspruch 9, **dadurch gekennzeichnet, daß** jeder Membranrahmen (32) in je einer parallel zur Flächenebene der Membran (30) in der zugehörigen Laminierplatte (2) verlaufenden Schiebeführung (22) werkzeuglos einschiebbar und herausziehbar gehaltert ist.

11. Laminator nach Anspruch 9 oder 10, **dadurch gekennzeichnet, daß** jede Membran (30) an ihrem Umfang mit einem umlaufenden Randprofil (33) versehen ist, wobei das Randprofil (33) im Querschnitt hakenförmig ist und im auf den Membranrahmen (32) aufgespannten Zustand der Membran (30) den Membranrahmen (32) an dessen Außenumfang hintergreift und wobei das Randprofil (33) werkzeuglos oder mittels Werkzeugeinsatzes jeweils in und außer Eingriff mit dem Membranrahmen (32) der zugehörigen Laminierplatte (2) bringbar ist.

12. Laminator nach einem der vorhergehenden Ansprüche, **dadurch gekennzeichnet, daß** die Membran (30) aus einem elastisch-flexiblen Material gebildet ist.

13. Laminator nach einem der vorhergehenden Ansprüche, **dadurch gekennzeichnet, daß** jeder Laminierplatte (2) ein oder mehrere Anschläge zugeordnet sind, die im zusammen gefahrenen Zustand der Laminierplatten (2) für eine definierte Lage der Laminierplatten (2) relativ zueinander sorgen.

14. Laminator nach Anspruch 13, **dadurch gekennzeichnet, daß** der Anschlag/die Anschläge durch den Membranrahmen (32) oder den Halterahmen (32') der Laminierplatte (2) oder eine an dem Rahmen (32, 32') vorgesehene Rahmenbefestigung gebildet ist/sind.

15. Laminator nach einem der Ansprüche 5 bis 14, **dadurch gekennzeichnet, daß** mindestens eine an der oberen oder an der unteren Laminierplatte (2) angreifende, auf- und abwärts verfahrbare Hubeinrichtung (13) vorgesehen ist und daß die Laminierplatten (2) untereinander über Verbindungsglieder (23) so verbunden sind, daß bei Bewegung der Hubeinrichtung (13) in einer ersten Bewegungsrichtung die Laminierplatten (2) aus ihrer zusammen gefahrenen Stellung heraus nach und nach fortschreitend in deren auseinander gefahrene Stellung überführbar sind und daß bei Bewegung der Hubeinrichtung (13) in einer zweiten Bewegungsrichtung die Laminierplatten (2) aus ihrer auseinander gefahrenen Stellung heraus nach und nach fortschreitend in deren zusammen gefahrene Stellung überführbar sind.

16. Laminator nach Anspruch 15, **dadurch gekennzeichnet, daß** die Hubeinrichtung (13) durch mindestens eine Kolben-Zylinder-Einheit oder durch mindestens eine motorisch verstellbare Spindel gebildet ist.

17. Laminator nach Anspruch 15 oder 16, **dadurch gekennzeichnet, daß** die Verbindungsglieder (23) je Laminierplatte (2) durch mehrere Zugstangen gebildet sind, die jeweils an ihrem einen Ende mit einer Laminierplatte (2) fest verbunden sind, die jeweils durch eine Durchbrechung (24) in der nach unten oder oben folgenden Laminierplatte (2) verlaufen und die an ihrem anderen Ende einen vergrößerten, nicht durch die Durchbrechung (24) passenden Kopf oder Anschlag aufweisen.

18. Laminator nach einem der Ansprüche 1 bis 4 und nach Anspruch 7, **dadurch gekennzeichnet, daß** alle Laminierplatten (2) im Abstand voneinander höhenfest angeordnet sind und daß relativ dazu die Andrückeinrichtungen (3) und/oder die Heizplatten (20) höhenverstellbar sind.

19. Laminator nach Anspruch 18, **dadurch gekennzeichnet, daß** jeweils eine Laminierplatte (2) mit der jeweils zugehörigen Heizplatte (20) und Andrückeinrichtung (3) oder jeweils eine Gruppe aus mehreren Laminierplatten (2) mit den zugehörigen Heizplatten (20) und Andrückeinrichtungen (3) in je einer eigenen, für sich evakuierbaren Laminierkammer (10) angeordnet ist.

20. Laminator nach einem der Ansprüche 7 bis 19, **dadurch gekennzeichnet, daß** jede Heizplatte (20) mit Hubelementen (25), vorzugsweise in Form von in die Heizplatte (20) eingelassenen Hubstiften oder Hubleisten, ausgestattet ist, die wahlweise ein Abheben eines zu laminierenden Bauteils (4) und seiner Laminatschichten (4') oder eines laminierten Bauteils (4) von der Heizplatte (20) oder ein Absenken des zu laminierenden Bauteils (4) und seiner Laminatschichten (4') auf die Heizplatte (20) gestatten.

21. Laminator nach einem der vorhergehenden Ansprüche, **dadurch gekennzeichnet, daß** er eine die zu laminierenden Bauteile (4) und die Laminatschichten (4') zuführende und/oder die laminierten Bauteile (4) nach dem Laminiervorgang abführende Fördereinrichtung (5) umfaßt.

22. Laminator nach Anspruch 21, **dadurch gekennzeichnet, daß** die Fördereinrichtung (5) pro Laminierplatte (2) je ein eigenes, eine das zu laminierende Bauteil (4) und die Laminatschichten (4') tragende Oberfläche der Laminierplatte (2) überstreichendes, endloses oder endliches Förderband (50) umfaßt.

23. Laminator nach Anspruch 22, **dadurch gekennzeichnet, daß** das Förderband (50) außer der das zu laminierende Bauteil (4) und die Laminatschichten (4') tragenden Oberfläche der Laminierplatte (2) auch die jeweils darunterliegende oder darüberliegende Andrückeinrichtung (3) überstreicht.

24. Laminator nach Anspruch 21, **dadurch gekennzeichnet, daß** die Fördereinrichtung (5) ein einziges, den Laminator (1) mäanderförmig durchlaufendes, alle Laminierplatten (2) überstreichendes, endloses oder endliches Förderband (50) umfaßt.

25. Laminator nach Anspruch 24, **dadurch gekennzeichnet, daß** das Förderband (50) außer allen das zu laminierende Bauteil (4) und die Laminatschichten (4') tragenden Oberflächen der Laminierplatten (2) auch alle Andrückeinrichtungen (3) überstreicht.

26. Laminator nach Anspruch 21, **dadurch gekennzeichnet, daß** die Fördereinrichtung (5) mindestens eine in Zu- und Abförderrichtung bewegbare Greifer- und Schieberanordnung (52) umfaßt.

27. Laminator nach einem der Ansprüche 21 bis 26, **dadurch gekennzeichnet, daß** die Fördereinrichtung (5) mindestens einen Bauteile-Vorratsspeicher (53) umfaßt, in dem eine der Zahl der Laminierplatten (2) entsprechende Zahl von zu laminierenden Bauteilen (4) mit den zugehörigen Laminatschichten (4') in einer der jeweiligen Höhenlage der einzelnen Laminierplatten (2) in deren auseinander gefahrener Stellung entsprechenden Höhenlage unterbringbar ist und aus dem die zu laminierenden Bauteile (4) mit den zugehörigen Laminatschichten (4') selbsttätig in eine Laminierposition auf den Laminierplatten (2) überführbar sind.

28. Laminator nach einem der Ansprüche 21 bis 27, **dadurch gekennzeichnet, daß** die Fördereinrichtung (5) wenigstens einen Bauteile-Entladespeicher (54) umfaßt, in den eine der Zahl der Laminierplatten (2) entsprechende Zahl von laminierten Bauteilen (4) in einer der jeweiligen Höhenlage der einzelnen Laminierplatten (2) in deren auseinander gefahrener Stellung entsprechenden Höhenlage unterbringbar ist, wobei die laminierten Bauteile (4) nach dem Laminiervorgang selbsttätig von den Laminierplatten (2) in den Bauteile-Entladespeicher (54) zur Abführung überführbar sind.

29. Laminator nach einem der vorhergehenden Ansprüche, **dadurch gekennzeichnet, daß** er je eine Zuführ- und Abführeinrichtung (41, 42) für mindestens eine das zu laminierende Bauteil (4) und die Laminatschichten (4') oberseitig und/oder unterseitig abdeckende, nach dem Laminiervorgang vom laminierten Bauteil (4) trennbare Abdeckfolie (40) umfaßt.

30. Laminator nach einem der Ansprüche 22 bis 25 oder nach Anspruch 29, **dadurch gekennzeichnet, daß** jedes Förderband (50) ein wieder verwendbares Band ist und/oder daß jede Abdeckfolie (40) eine wieder verwendbare Folie ist, wobei für jedes Förderband (50) und/oder für jede Abdeckfolie (40) eine Reinigungsstation (55) im oder am Laminator (1) oder als separate Station vorgesehen ist.

31. Laminator nach Anspruch 30, **dadurch gekennzeichnet, daß** die Reinigungsstation (55) mindestens eine drehantreibbare Reinigungsbürste (56) und mindestens einen Reinigungsschaber (57) umfaßt, die jeweils in Wirkeingriff mit der Seite/den Seiten des Förderbandes (50) und/oder der Abdeckfolie (40) bringbar sind, die beim Laminiervorgang mit den Laminatschichten (4') in Kontakt tritt/treten.

32. Laminator nach einem der Ansprüche 22 bis 25 oder nach Anspruch 29, **dadurch gekennzeichnet, daß** jedes Förderband (50) ein nur einmal verwendbares Band ist und/oder daß jede Abdeckfolie (40) eine nur einmal verwendbare Folie ist, wobei das Band (50) und/oder die Folie (40) nach ihrer Verwendung entsorgbar und durch ein frisches Band (50) und/oder durch eine frische Folie (40) ersetzbar ist.
